# EUROPEAN PATENT APPLICATION

(11) **EP 4 601 181 A1**
(43) Date of publication of application: **13.08.2025**
(21) Application number: 23874635.8
(22) Date of filing: 19.09.2023
(51) Int. Cl.: H02N 2/14, H02N 2/16

(54) **VIBRATION ACTUATOR DRIVE DEVICE AND DRIVE METHOD FOR SAME**

(30) Priority: 07.10.2022 JP 2022162336
(71) Applicant: CANON KABUSHIKI KAISHA, Tokyo 146-8501 (JP)
(72) Inventor: KATAOKA, Kenichi, Tokyo 146-8501 (JP)
(74) Representative: Canon Europe Limited
(86) International application number: PCT/JP2023/033870
(87) International publication number: WO 2024/075506

(57) **Abstract**

A driving apparatus includes: first vibration detection means 241 and second vibration detection means 242 for detecting vibrations of a vibrating body of a vibration-type actuator 100 independently of each other; timing setting means 251 for setting a timing of detection by the second vibration detection means 242 on a basis of a first output signal of the first vibration detection means 241; sampling means 252 for acquiring a sign-affixed vibration amount by sampling a second output signal of the second vibration detection means 242 at the timing set by the timing setting means 251; and an arithmetic operation means 253 for calculating a vibration vector in a direction of movement of a moving body of the vibration-type actuator 100 on a basis of the sign-affixed vibration amount acquired by the sampling means 252.

## Description

### Technical Field

The present invention relates to a driving apparatus for a vibration-type actuator, and a driving method thereof.

### Background Art

In some kinds of a driving apparatus for a vibration-type actuator that includes a vibrating body configured to be excited by a piezoelectric element, a magnetostrictive element, etc. and a moving body in contact with the vibrating body, vibration detection means for detecting vibrations of the vibrating body is provided for the purpose of improving speed stability, immediate responsiveness, etc.

For example, PTL 1 discloses that a driving apparatus configured to control the rotation speed of a vibration-type actuator to be constant includes a minor loop for controlling the vibration amplitude of a vibrating body.

Specifically, in the vibration-type actuator disclosed in PTL 1, a piezoelectric element for detecting the vibrations of the vibrating body is provided, and an alternating-current signal outputted by the piezoelectric element is inputted into an AC-DC converter to detect the vibration amplitude of the vibrating body. Then, in PTL 1, the minor loop controls the amplitude of an applied voltage such that the vibration amplitude of the vibrating body follows a target amplitude, thereby improving the immediate responsiveness and stability of speed control.

In PTL 2, on the premise that the moving speed of a moving body is proportional to the vibration amplitude of a vibrating body, a sign-affixed moving speed including a moving direction is estimated from information on a phase difference between two-phase applied voltages and on the vibration amplitude of the vibrating body.

In PTL 3, in a driving apparatus that performs position control of a vibration-type actuator, a minor loop for controlling the speed of a moving body is inserted for improving stability. In the minor loop disclosed in PTL 1, the rotation speed in one direction is controlled by detecting the vibration amplitude without a sign, whereas, in PTL 3, speed control that involves directional inversion is realized by detecting the speed with a sign.

### Citation List

### Patent Literature

PTL 1: Japanese Patent No. 2874765
PTL 2: Japanese Patent Laid-Open No. 2003-33057
PTL 3: Japanese Patent Laid-Open No**.** 5-184167

### Summary of Invention

### Technical Problem

However, in a minor loop that controls the vibration amplitude of a vibrating body as disclosed in PTL 1, the sign of the vibration amplitude of the vibrating body does not change even when the moving direction of a moving body changes; therefore, there is a problem that it cannot be used for position control that involves a change in the moving direction, such as the one disclosed in PTL 3.

In PTL 2, the speed including the moving direction of the moving body is estimated by adding the sign of the phase difference between the two-phase applied voltages to the detected value of the vibration amplitude of the vibrating body. However, in PTL 2, a change in the detected value of the vibration amplitude of the vibrating body has a time lag behind a change in the phase difference between the two-phase applied voltages; therefore, there is a problem that the sign of the vibration amplitude of the vibrating body will be set erroneously especially in the neighborhood of the timing at which the moving direction is inverted.

In a case where a minor loop for controlling the speed of a moving body is used as disclosed in PTL 3, there is a problem that a control bandwidth cannot be widened due to the backlash of a mechanism from a vibrating body to a speed sensor and due to the influence of a resonant system.

The present invention has been made in view of the problems described above. Its object is to provide a scheme that makes it possible to, in a vibration-type actuator that includes a vibrating body and a moving body, detect a vibration state of the vibrating body properly also in a region where the direction of movement of the moving body is inverted.

### Solution to Problem

A driving apparatus for a vibration-type actuator according to the present invention is a driving apparatus for a vibration-type actuator including a vibrating body and a moving body that is in press contact with the vibrating body, the driving apparatus comprising: generation means for generating alternating-current signals of two or more phases to be applied to the vibrating body; first vibration detection means and second vibration detection means for detecting vibrations of the vibrating body independently of each other; setting means for setting a timing of the detection by the second vibration detection means on a basis of a first output signal that is an output signal of the first vibration detection means; sampling means for acquiring a sign-affixed vibration amount by sampling either a second output signal that is an output signal of the second vibration detection means or an output signal obtained through subtraction of the first output signal and the second output signal at the timing set by the setting means; and arithmetic operation means for calculating a vibration vector in a direction of movement of the moving body on a basis of the sign-affixed vibration amount.

The present invention includes a driving method for a vibration-type actuator by the driving apparatus for the vibration-type actuator stated above.

### Advantageous Effects of Invention

According to the present invention, in a vibration-type actuator that includes a vibrating body and a moving body, it is possible to detect a vibration state of the vibrating body properly also in a region where the direction of movement of the moving body is inverted.

### Brief Description of Drawings

[Fig. 1] Fig. 1 is a diagram illustrating an example of a schematic configuration of a vibration-type actuator according to a first embodiment of the present invention.
[Fig. 2] Fig. 2 is a diagram illustrating an example of an electrode structure configured by a plurality of piezoelectric bodies on a second surface of a piezoelectric element illustrated in Fig. 1 and electric connection wiring thereof.
[Fig. 3] Fig. 3 is a diagram illustrating a first configuration example of a driving apparatus for a vibration-type actuator according to the first embodiment of the present invention.
[Fig. 4] Fig. 4 is a diagram illustrating a first example of a relationship between a B-phase amplitude command from a CPU and alternating-current signals generated by alternating-current signal generation means in a driving apparatus for a vibration-type actuator illustrated in Fig. 3.
[Fig. 5] Fig. 5 is a diagram illustrating a second example of a relationship between a B-phase amplitude command from a CPU and alternating-current signals generated by alternating-current signal generation means in a driving apparatus for a vibration-type actuator illustrated in Fig. 3.
[Fig. 6A] Fig. 6A is a diagram illustrating an example of a relationship between detected values of currents in relation to a B-phase amplitude command from a CPU and a vibration vector outputted by arithmetic operation means in a driving apparatus for a vibration-type actuator illustrated in Fig. **3****.**
[Fig. 6B] Fig. 6B is a diagram illustrating an example of a relationship between detected values of currents in relation to a B-phase amplitude command from a CPU and a vibration vector outputted by arithmetic operation means in a driving apparatus for a vibration-type actuator illustrated in Fig. 3.
[Fig. 6C] Fig. 6C is a diagram illustrating an example of a relationship between detected values of currents in relation to a B-phase amplitude command from a CPU and a vibration vector outputted by arithmetic operation means in a driving apparatus for a vibration-type actuator illustrated in Fig. 3.
[Fig. 6D] Fig. 6D is a diagram illustrating an example of a relationship between detected values of currents in relation to a B-phase amplitude command from a CPU and a vibration vector outputted by arithmetic operation means in a driving apparatus for a vibration-type actuator illustrated in Fig. 3.
[Fig. 6E] Fig. 6E is a diagram illustrating an example of a relationship between detected values of currents in relation to a B-phase amplitude command from a CPU and a vibration vector outputted by arithmetic operation means in a driving apparatus for a vibration-type actuator illustrated in Fig. 3.
[Fig. 6F] Fig. 6F is a diagram illustrating an example of a relationship between detected values of currents in relation to a B-phase amplitude command from a CPU and a vibration vector outputted by arithmetic operation means in a driving apparatus for a vibration-type actuator illustrated in Fig. 3.
[Fig. 6G] Fig. 6G is a diagram illustrating an example of a relationship between detected values of currents in relation to a B-phase amplitude command from a CPU and a vibration vector outputted by arithmetic operation means in a driving apparatus for a vibration-type actuator illustrated in Fig. 3.
[Fig. 6H] Fig. 6H is a diagram illustrating an example of a relationship between detected values of currents in relation to a B-phase amplitude command from a CPU and a vibration vector outputted by arithmetic operation means in a driving apparatus for a vibration-type actuator illustrated in Fig. 3.
[Fig. 7A] Fig. 7A is a diagram for explaining a processing example of sampling means and arithmetic operation means in a case where a plurality of timings is set by timing setting means in a driving apparatus for a vibration-type actuator illustrated in Fig. 3.
[Fig. 7B] Fig. 7B is a diagram for explaining a processing example of sampling means and arithmetic operation means in a case where a plurality of timings is set by timing setting means in a driving apparatus for a vibration-type actuator illustrated in Fig. 3.
[Fig. 7C] Fig. 7C is a diagram for explaining a processing example of sampling means and arithmetic operation means in a case where a plurality of timings is set by timing setting means in a driving apparatus for a vibration-type actuator illustrated in Fig. 3.
[Fig. 7D] Fig. 7D is a diagram for explaining a processing example of sampling means and arithmetic operation means in a case where a plurality of timings is set by timing setting means in a driving apparatus for a vibration-type actuator illustrated in Fig. 3.
[Fig. 7E] Fig. 7E is a diagram for explaining a processing example of sampling means and arithmetic operation means in a case where a plurality of E timings is set by timing setting means in a driving apparatus for a vibration-type actuator illustrated in Fig. 3.
[Fig. 7F] Fig. 7F is a diagram for explaining a processing example of sampling means and arithmetic operation means in a case where a plurality of timings is set by timing setting means in a driving apparatus for a vibration-type actuator illustrated in Fig. 3.
[Fig. 8A] Fig. 8A is a diagram for explaining a processing example of sampling means and arithmetic operation means in a case where a plurality of timings is set by timing setting means in a driving apparatus for a vibration-type actuator illustrated in Fig. 3.
[Fig. 8B] Fig. 8B is a diagram for explaining a processing example of sampling means and arithmetic operation means in a case where a plurality of timings is set by timing setting means in a driving apparatus for a vibration-type actuator illustrated in Fig. 3.
[Fig. 8C] Fig. 8C is a diagram for explaining a processing example of sampling means and arithmetic operation means in a case where a plurality of timings is set by timing setting means in a driving apparatus for a vibration-type actuator illustrated in Fig. 3.
[Fig. 8D] Fig. 8D is a diagram for explaining a processing example of sampling means and arithmetic operation means in a case where a plurality of timings is set by timing setting means in a driving apparatus for a vibration-type actuator illustrated in Fig. 3.
[Fig. 8E] Fig. 8E is a diagram for explaining a processing example of sampling means and arithmetic operation means in a case where a plurality of timings is set by timing setting means in a driving apparatus for a vibration-type actuator illustrated in Fig. 3.
[Fig. 8F] Fig. 8F is a diagram for explaining a processing example of sampling means and arithmetic operation means in a case where a plurality of timings is set by timing setting means in a driving apparatus for a vibration-type actuator illustrated in Fig. 3.
[Fig. 9] Fig. 9 is a flowchart illustrating an example of processing procedures of a driving method performed by a driving apparatus for a vibration-type actuator illustrated in Fig. 3.
[Fig. 10] Fig. 10 is a diagram illustrating a second configuration example of a driving apparatus for a vibration-type actuator according to the first embodiment of the present invention.
[Fig. 11] Fig. 11 is a diagram illustrating an example of a relationship between a phase difference command from a CPU and alternating-current signals generated by alternating-current signal generation means in a driving apparatus for a vibration-type actuator illustrated in Fig. 10.
[Fig. 12A] Fig. 12A is a diagram illustrating an example of a relationship between detected values of vibration detection signals in relation to a phase difference command from a CPU and a vibration vector outputted by arithmetic operation means in a driving apparatus for a vibration-type actuator illustrated in Fig. 10.
[Fig. 12B] Fig. 12B is a diagram illustrating an example of a relationship between detected values of vibration detection signals in relation to a phase difference command from a CPU and a vibration vector outputted by arithmetic operation means in a driving apparatus for a vibration-type actuator illustrated in Fig. 10.
[Fig. 12C] Fig. 12C is a diagram illustrating an example of a relationship between detected values of vibration detection signals in relation to a phase difference command from a CPU and a vibration vector outputted by arithmetic operation means in a driving apparatus for a vibration-type actuator illustrated in Fig. 10.
[Fig. 12D] Fig. 12D is a diagram illustrating an example of a relationship between detected values of vibration detection signals in relation to a phase difference command from a CPU and a vibration vector outputted by arithmetic operation means in a driving apparatus for a vibration-type actuator illustrated in Fig. 10.
[Fig. 12E] Fig. 12E is a diagram illustrating an example of a relationship between detected values of vibration detection signals in relation to a phase difference command from a CPU and a vibration vector outputted by arithmetic operation means in a driving apparatus for a vibration-type actuator illustrated in Fig. 10.
[Fig. 12F] Fig. 12F is a diagram illustrating an example of a relationship between detected values of vibration detection signals in relation to a phase difference command from a CPU and a vibration vector outputted by arithmetic operation means in a driving apparatus for a vibration-type actuator illustrated in Fig. 10.
[Fig. 12G] Fig. 12G is a diagram illustrating an example of a relationship between detected values of vibration detection signals in relation to a phase difference command from a CPU and a vibration vector outputted by arithmetic operation means in a driving apparatus for a vibration-type actuator illustrated in Fig. 10.
[Fig. 12H] Fig. 12H is a diagram illustrating an example of a relationship between detected values of vibration detection signals in relation to a phase difference command from a CPU and a vibration vector outputted by arithmetic operation means in a driving apparatus for a vibration-type actuator illustrated in Fig. 10.
[Fig. 13A] Fig. 13A is a diagram for explaining a processing example of sampling means and arithmetic operation means in a case where a plurality of timings is set by timing setting means in a driving apparatus for a vibration-type actuator illustrated in Fig. 10.
[Fig. 13B] Fig. 13B is a diagram for explaining a processing example of sampling means and arithmetic operation means in a case where a plurality of timings is set by timing setting means in a driving apparatus for a vibration-type actuator illustrated in Fig. 10.
[Fig. 13C] Fig. 13C is a diagram for explaining a processing example of sampling means and arithmetic operation means in a case where a plurality of timings is set by timing setting means in a driving apparatus for a vibration-type actuator illustrated in Fig. 10.
[Fig. 13D] Fig. 13D is a diagram for explaining a processing example of sampling means and arithmetic operation means in a case where a plurality of timings is set by timing setting means in a driving apparatus for a vibration-type actuator illustrated in Fig. 10.
[Fig. 13E] Fig. 13E is a diagram for explaining a processing example of sampling means and arithmetic operation means in a case where a plurality of timings is set by timing setting means in a driving apparatus for a vibration-type actuator illustrated in Fig. 10.
[Fig. 13F] Fig. 13F is a diagram for explaining a processing example of sampling means and arithmetic operation means in a case where a plurality of timings is set by timing setting means in a driving apparatus for a vibration-type actuator illustrated in Fig. 10.
[Fig. 14] Fig. 14 is a flowchart illustrating an example of processing procedures of a driving method performed by a driving apparatus for a vibration-type actuator illustrated in Fig. 10.
[Fig. 15] Fig. 15 is a diagram illustrating a third configuration example of a driving apparatus for a vibration-type actuator according to the first embodiment of the present invention.
[Fig. 16] Fig. 16 is a diagram illustrating a fourth configuration example of a driving apparatus for a vibration-type actuator according to the first embodiment of the present invention.
[Fig. 17A] Fig. 17A is a diagram illustrating an example of a schematic configuration and a vibration shape of a vibration-type actuator according to a second embodiment of the present invention.
[Fig. 17B] Fig. 17B is a diagram illustrating an example of a schematic configuration and a vibration shape of a vibration-type actuator according to the second embodiment of the present invention.
[Fig. 17C] Fig. 17C is a diagram illustrating an example of a schematic configuration and a vibration shape of a vibration-type actuator according to the second embodiment of the present invention.
[Fig. 17D] Fig. 17D is a diagram illustrating an example of a schematic configuration and a vibration shape of a vibration-type actuator according to the second embodiment of the present invention.
[Fig. 17E] Fig. 17E is a diagram illustrating an example of a schematic configuration and a vibration shape of a vibration-type actuator according to the second embodiment of the present invention.
[Fig. 18] Fig. 18 is a diagram illustrating a first configuration example of a driving apparatus for a vibration-type actuator according to the second embodiment of the present invention.
[Fig. 19A] Fig. 19A is a diagram illustrating an example of a relationship between detected values of currents in relation to a phase difference command from a CPU and a vibration vector outputted by arithmetic operation means in a driving apparatus for a vibration-type actuator illustrated in Fig. 18.
[Fig. 19B] Fig. 19B is a diagram illustrating an example of a relationship between detected values of currents in relation to a phase difference command from a CPU and a vibration vector outputted by arithmetic operation means in a driving apparatus for a vibration-type actuator illustrated in Fig. 18.
[Fig. 19C] Fig. 19C is a diagram illustrating an example of a relationship between detected values of currents in relation to a phase difference command from a CPU and a vibration vector outputted by arithmetic operation means in a driving apparatus for a vibration-type actuator illustrated in Fig. 18.
[Fig. 19D] Fig. 19D is a diagram illustrating an example of a relationship between detected values of currents in relation to a phase difference command from a CPU and a vibration vector outputted by arithmetic operation means in a driving apparatus for a vibration-type actuator illustrated in Fig. 18.
[Fig. 19E] Fig. 19E is a diagram illustrating an example of a relationship between detected values of currents in relation to a phase difference command from a CPU and a vibration vector outputted by arithmetic operation means in a driving apparatus for a vibration-type actuator illustrated in Fig. 18.
[Fig. 19F] Fig. 19F is a diagram illustrating an example of a relationship between detected values of currents in relation to a phase difference command from a CPU and a vibration vector outputted by arithmetic operation means in a driving apparatus for a vibration-type actuator illustrated in Fig. 18.
[Fig. 19G] Fig. 19G is a diagram illustrating an example of a relationship between detected values of currents in relation to a phase difference command from a CPU and a vibration vector outputted by arithmetic operation means in a driving apparatus for a vibration-type actuator illustrated in Fig. 18.
[Fig. 19H] Fig. 19H is a diagram illustrating an example of a relationship between detected values of currents in relation to a phase difference command from a CPU and a vibration vector outputted by arithmetic operation means in a driving apparatus for a vibration-type actuator illustrated in Fig. 18.
[Fig. 20A] Fig. 20A is a diagram for explaining a processing example of sampling means and arithmetic operation means in a case where a plurality of timings is set by timing setting means in a driving apparatus for a vibration-type actuator illustrated in Fig. 18.
[Fig. 20B] Fig. 20B is a diagram for explaining a processing example of sampling means and arithmetic operation means in a case where a plurality of timings is set by timing setting means in a driving apparatus for a vibration-type actuator illustrated in Fig. 18.
[Fig. 20C] Fig. 20C is a diagram for explaining a processing example of sampling means and arithmetic operation means in a case where a plurality of timings is set by timing setting means in a driving apparatus for a vibration-type actuator illustrated in Fig. 18.
[Fig. 20D] Fig. 20D is a diagram for explaining a processing example of sampling means and arithmetic operation means in a case where a plurality of timings is set by timing setting means in a driving apparatus for a vibration-type actuator illustrated in Fig. 18.
[Fig. 20E] Fig. 20E is a diagram for explaining a processing example of sampling means and arithmetic operation means in a case where a plurality of timings is set by timing setting means in a driving apparatus for a vibration-type actuator illustrated in Fig. 18.
[Fig. 20F] Fig. 20F is a diagram for explaining a processing example of sampling means and arithmetic operation means in a case where a plurality of timings is set by timing setting means in a driving apparatus for a vibration-type actuator illustrated in Fig. 18.
[Fig. 21] Fig. 21 is a flowchart illustrating an example of processing procedures of a driving method performed by a driving apparatus for a vibration-type actuator illustrated in Fig. 18.
[Fig. 22] Fig. 22 is a diagram illustrating a second configuration example of a driving apparatus for a vibration-type actuator according to the second embodiment of the present invention.
[Fig. 23] Fig. 23 is a diagram illustrating a third configuration example of a driving apparatus for a vibration-type actuator according to the second embodiment of the present invention.
[Fig. 24] Fig. 24 is a diagram illustrating an example of the internal configuration of an interpolation arithmetic operator illustrated in Fig. 23.
[Fig. 25] Fig. 25 is a diagram illustrating an example of a schematic configuration of a vibration-type actuator according to a third embodiment of the present invention.
[Fig. 26] Fig. 26 is a diagram illustrating a first configuration example of a driving apparatus for a vibration-type actuator according to the third embodiment of the present invention.
[Fig. 27] Fig. 27 is a diagram illustrating a second configuration example of a driving apparatus for a vibration-type actuator according to the third embodiment of the present invention.

### Description of Embodiments

Modes for carrying out the present invention (embodiments) will be described below while referring to the drawings.

### (First Embodiment)

First, a first embodiment of the present invention will now be described.

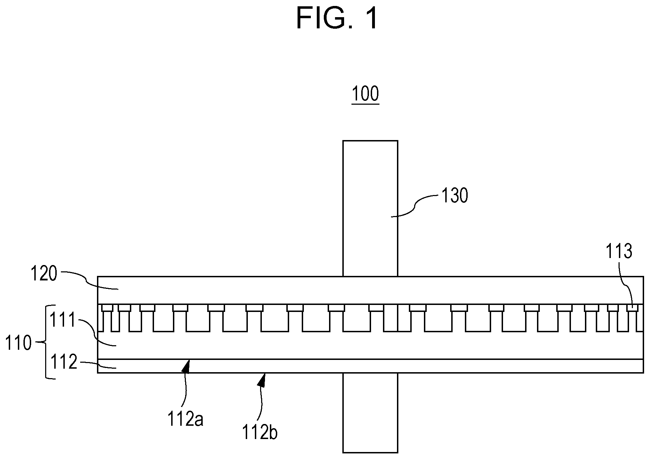

Fig. 1 is a diagram illustrating an example of a schematic configuration of a vibration-type actuator 100 according to a first embodiment of the present invention. Specifically, the vibration-type actuator 100 according to the first embodiment is an annular vibration-type actuator as illustrated in Fig. 1. Fig. 1 presents a side view of the vibration-type actuator 100 according to the first embodiment.

As illustrated in Fig. 1, the vibration-type actuator 100 according to the first embodiment includes a vibrating body 110, a moving body 120, and a rotation shaft 130.

As illustrated in Fig. 1, the vibrating body 110 includes an elastic body 111, a piezoelectric element 112, and a friction member 113. The elastic body 111, to which the piezoelectric element 112 configured to awake vibrations is bonded, has a protrusion structure. In Fig. 1, a surface, of the piezoelectric element 112, bonded to the elastic body 111 is illustrated as a first surface 112a, and an opposite surface thereof facing away from the first surface 112a is illustrated as a second surface 112b.

The moving body 120 is a rotor that is in contact with the vibrating body 110 due to pressing by a non-illustrated pressing mechanism via the friction member 113.

The rotation shaft 130 is a rotation shaft fixed to the center of the moving body 120.

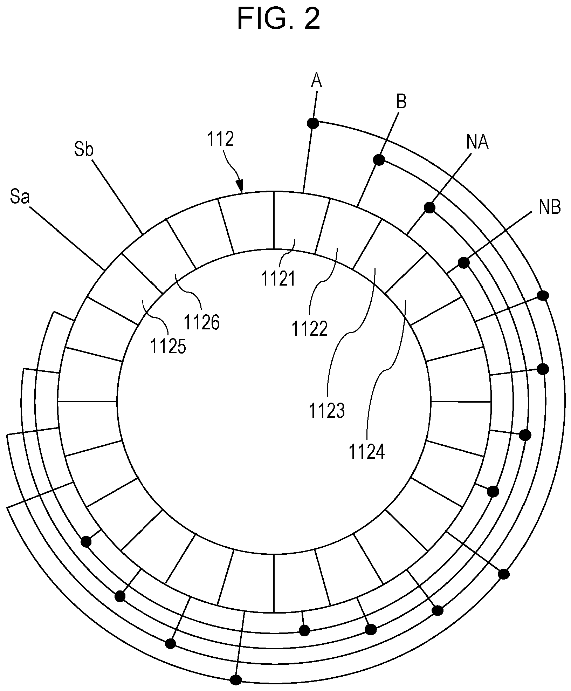

Fig. 2 is a diagram illustrating an example of an electrode structure configured by a plurality of piezoelectric bodies on the second surface 112b of the piezoelectric element 112 illustrated in Fig. 1 and electric connection wiring thereof.

As illustrated in Fig. 2, twenty-four electrodes are provided on the circumference of the piezoelectric element 112 at equal intervals. The electrodes of the piezoelectric element 112 in fours are electrically connected via the connection wiring along the circumference. Those in the connected electrode group each will be referred to herein as a piezoelectric body 1121, a piezoelectric body 1122, a piezoelectric body 1123, and a piezoelectric body 1124.

As illustrated in Fig. 2, when an alternating voltage A is applied to the piezoelectric body 1121, six out-of-plane flexural vibration waves are formed along the circumference of the vibrating body 110. Furthermore, when an alternating voltage B, an alternating voltage NA, and an alternating voltage NB, which are phase-shifted sequentially at intervals of 90° with respect to the alternating voltage A, are applied to the piezoelectric element 1122, the piezoelectric element 1123, and the piezoelectric element 1124 respectively, six out-of-plane traveling vibration waves are formed on the vibrating body 110. Then, these six out-of-plane traveling vibration waves produce a relative force between the moving body 120 and the vibrating body 110, thereby causing the moving body 120, which is a rotor, to rotate.

A plurality of electrodes for vibration detection is provided in the piezoelectric element 112. These electrodes will be referred to as a piezoelectric body 1125 and a piezoelectric body 1126. Specifically, the piezoelectric body 1125 detects vibrations excited by the piezoelectric body 1121 and the piezoelectric body 1123, and outputs a vibration detection signal Sa. The piezoelectric body 1126 detects vibrations excited by the piezoelectric body 1122 and the piezoelectric body 1124, and outputs a vibration detection signal Sb.

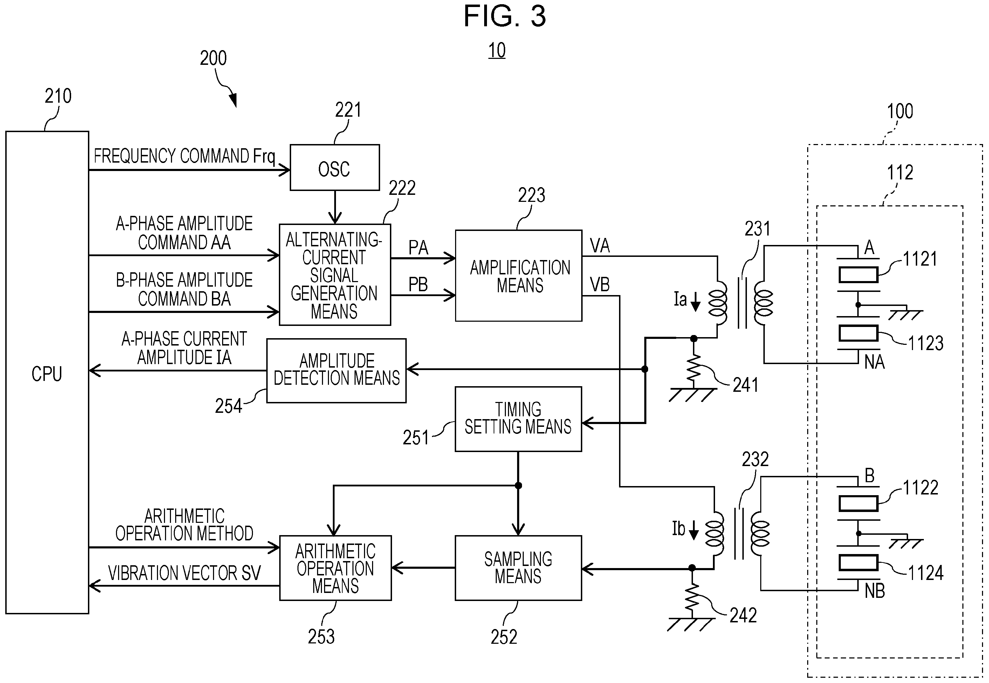

Fig. 3 is a diagram illustrating a first configuration example of a driving apparatus 10 for a vibration-type actuator according to the first embodiment of the present invention. In Fig. 3, the same reference characters are assigned to the components that are the same as those illustrated in Figs. 1 and 2.

The driving apparatus 10 for a vibration-type actuator illustrated in Fig. 3 includes the vibration-type actuator 100 and a control device 200. Specifically, in Fig. 3, only the piezoelectric element 112 illustrated in Figs. 1 and 2 is illustrated inside the vibration-type actuator 100, and only the piezoelectric bodies 1121 to 1124 illustrated in Fig. 2 are illustrated inside the piezoelectric element 112.

The control device 200 illustrated in Fig. 3 includes a CPU 210, an oscillator 221, alternating-current signal generation means 222, amplification means 223, timing setting means 251, sampling means 252, arithmetic operation means 253, and amplitude detection means 254. The control device 200 illustrated in Fig. 3 further includes transformers 231 and 232 and resistors 241 and 242.

The CPU 210 is a constituent unit that centrally controls the operation of the control device 200 illustrated in Fig. 3.

The oscillator 221 is an oscillator the frequency of an output signal of which is set based on a frequency command from the CPU 210.

The alternating-current signal generation means 222 is a constituent unit that generates two-phase alternating-current signals PA and PB in synchronization with the signal from the oscillator 221. In addition, for example, based on a B-phase amplitude command from the CPU 210, the alternating-current signal generation means 222 sets the pulse width of the alternating-current signal PB.

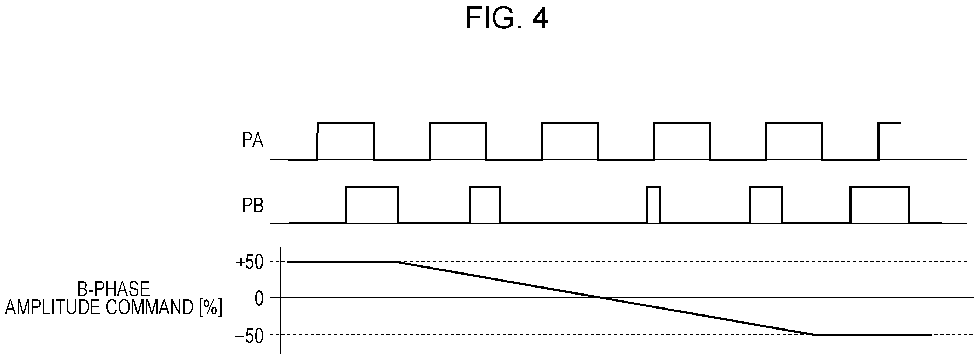

Fig. 4 is a diagram illustrating a first example of a relationship between the B-phase amplitude command from the CPU 210 and the alternating-current signals PA and PB generated by the alternating-current signal generation means 222 in the driving apparatus 10 for a vibration-type actuator illustrated in Fig. 3. The B-phase amplitude command illustrated in Fig. 4 is a signal commanding the duty of the alternating-current signal PB to be between -50% to +50%. The sign of the B-phase amplitude command illustrated in Fig. 4 is plus when the phase of the alternating-current signal PB is behind the phase of the alternating-current signal PA by 90°, and is minus when it is ahead thereof.

In the present embodiment, at the alternating-current signal generation means 222, the B-phase amplitude command is specified in terms of pulse width; instead, for example, the B-phase amplitude command may be specified in terms of voltage.

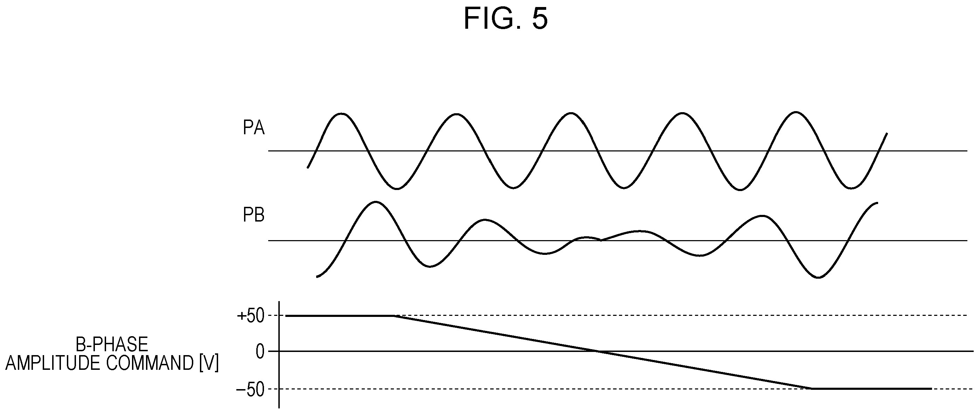

Fig. 5 is a diagram illustrating a second example of a relationship between the B-phase amplitude command from the CPU 210 and the alternating-current signals PA and PB generated by the alternating-current signal generation means 222 in the driving apparatus 10 for a vibration-type actuator illustrated in Fig. 3. The B-phase amplitude command illustrated in Fig. 5 is a signal commanding the voltage to be between -50V and +50V. The alternating-current signals PA and PB illustrated in Fig. 5 show changes in waveform when the voltage is commanded to be between -50V and +50V by the B-phase amplitude command. The sign of the B-phase amplitude command illustrated in Fig. 5 is plus when the phase of the alternating-current signal PB is behind the phase of the alternating-current signal PA by 90°, and is minus when it is ahead thereof.

Now, reference is made back to Fig. 3.

The amplification means 223 is a constituent unit that amplifies the alternating-current signals PA and PB generated by the alternating-current signal generation means 222 and outputs alternating-current signals VA and VB. The alternating-current signal VA is further amplified through the transformer 231 and is applied as a drive voltage of opposite phases to the piezoelectric body 1121 and the piezoelectric body 1123 of the piezoelectric element 112. Similarly, the alternating-current voltage VB is further amplified through the transformer 232 and is applied as a drive voltage of opposite phases to the piezoelectric body 1122 and the piezoelectric body 1124 of the piezoelectric element 112.

The inductance values of the transformer 231 and the transformer 232 on the side connected to the piezoelectric bodies 1121, 1122, 1123, and 1124 of the piezoelectric element 112 are frequency-matched with the damping capacitances of the piezoelectric bodies. The values of a current Ia and a current Ib flowing through the transformer 231 and the transformer 232 respectively are approximately proportional to the value of a mechanical arm current flowing through the piezoelectric bodies 1121, 1122, 1123, and 1124. The term "mechanical arm current" as used herein means a remainder of subtracting the current flowing through the damping capacitance of the piezoelectric body from the current flowing through the piezoelectric body.

The resistor 241 is an electronic part for measuring the current Ia flowing as a result of applying a drive voltage to the piezoelectric element of the vibrating body 110 (which may be considered as a mechanical arm current). The resistor 242 is an electronic part for measuring the current Ib flowing as a result of applying a drive voltage to the piezoelectric element of the vibrating body 110 (which may be considered as a mechanical arm current). In the driving apparatus 10 for a vibration-type actuator illustrated in Fig. 3, the resistor 241 and the resistor 242 correspond respectively to "first vibration detection means" and "second vibration detection means" that detect vibrations of the vibrating body 110 independently of each other. In the driving apparatus 10 for a vibration-type actuator illustrated in Fig. 3, the current Ia corresponds to a first output signal that is an output signal of the resistor 241 (first vibration detection means). In the driving apparatus 10 for a vibration-type actuator illustrated in Fig. 3, the current Ib corresponds to a second output signal that is an output signal of the resistor 242 (second vibration detection means).

Though the current Ia (which may be considered as a mechanical arm current) and the current Ib (which may be considered as a mechanical arm current) are detected on the primary side of the transformer 231 and the transformer 232 respectively in the example illustrated in Fig. 3, any other mode may be adopted. For example, it is possible to measure the mechanical arm current by applying the same voltage as that of the piezoelectric body to a capacitor whose electrostatic capacitance is equivalent to the damping capacitance of the piezoelectric body and subtracting the current flowing through the capacitor from the current flowing through the piezoelectric body.

The amplitude detection means 254 is a constituent unit that detects the amplitude of the current Ia, and outputs an A-phase current amplitude IA to the CPU 210.

The timing setting means 251 is a constituent unit that sets, based on waveform information of the current Ia (first output signal), a timing as to when the current Ib (second output signal) should be detected (timing of detection by the resistor 242).

The sampling means 252 is a constituent unit that acquires a sign-affixed vibration amount by sampling the waveform of the current Ib at the timing set by the timing setting means 251.

The arithmetic operation means 253 is a constituent unit that calculates a vibration vector in the direction of movement of the moving body 120 by using an arithmetic operation method designated by the CPU 210, based on the sign-affixed vibration amount acquired by the sampling means 252.

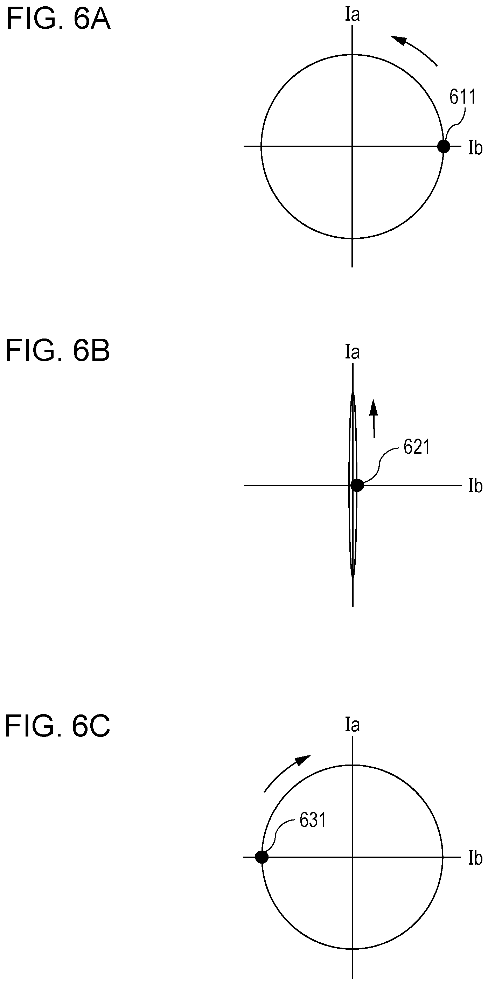

Figs. 6A to 6H are diagrams illustrating an example of a relationship between detected values of the current Ia and the current Ib in relation to the B-phase amplitude command from the CPU 210 and the vibration vector outputted by the arithmetic operation means 253 in the driving apparatus 10 for a vibration-type actuator illustrated in Fig. 3. Figs. 6A to 6H illustrate a case where "without processing", according to which the output of the sampling means 252 is outputted on an as-is basis, is designated as the arithmetic operation method inputted to the arithmetic operation means 253 from the CPU 210 illustrated in Fig. 3.

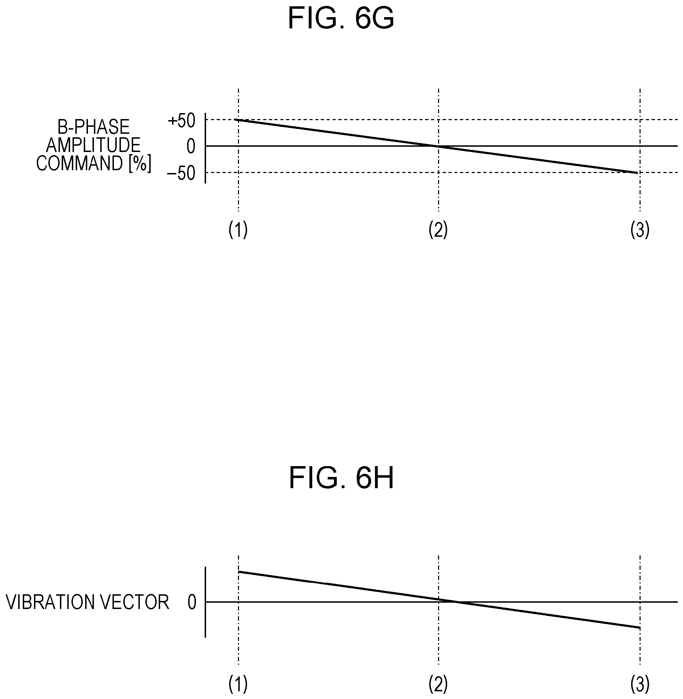

Figs. 6A, 6B, and 6C show Lissajous waveforms with the horizontal axis representing the current Ib and the vertical axis representing the current Ia. In Figs. 6A, 6B, and 6C, the arrow indicates the direction of Lissajous rotation. Specifically, Fig. 6A shows a state in which the B-phase amplitude command illustrated in Fig. 6G is +50%, Fig. 6B shows a state in which the B-phase amplitude command is 0%, and Fig. 6C shows a state in which the B-phase amplitude command is -50%. In Figs. 6A, 6B, and 6C, filled-circle symbols 611, 621, and 631 denote the timing set by the timing setting means 251 respectively. Specifically, the timing setting means 251 sets the point in time at which the current Ia goes across zero from minus to plus as the timing denoted by the filled-circle symbols 611 to 631 in Figs. 6A to 6C respectively.

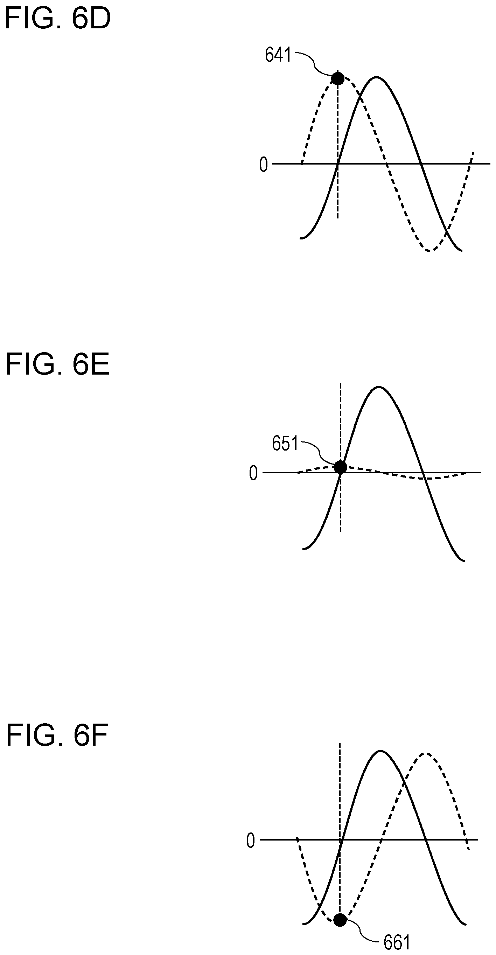

Figs. 6D, 6E, and 6F show the waveforms of the current Ia (solid curve) and the current Ib (dashed curve). Specifically, Fig. 6D shows a state in which the B-phase amplitude command illustrated in Fig. 6G is +50%, Fig. 6E shows a state in which the B-phase amplitude command is 0%, and Fig. 6F shows a state in which the B-phase amplitude command is -50%. The timing denoted by the filled-circle symbols 611 to 631 in Figs. 6A to 6C corresponds to the timing denoted by filled-circle symbols 641 to 661 in Figs. 6D to 6F respectively. In Figs. 6D, 6E, and 6F, the sampling means 252 samples the current Ib (dashed curve) at the above-mentioned timing to acquire the value of the current Ib denoted by each filled-circle symbol 641, 651, 661 as a vibration amount with plus or minus sign affixed thereto.

Fig. 6G shows the value of the B-phase amplitude command from the CPU 210 illustrated in Fig. 3. Fig. 6H shows the value, of the vibration vector in the direction of movement of the moving body 120, calculated by the arithmetic operation means 253 on the basis of the sign-affixed vibration amount acquired by the sampling means 252. In the vibration vector illustrated in Fig. 6H, (1) corresponds to a state in which the B-phase amplitude command is +50%, (2) corresponds to a state in which the B-phase amplitude command is 0%, and (3) corresponds to a state in which the B-phase amplitude command is -50%.

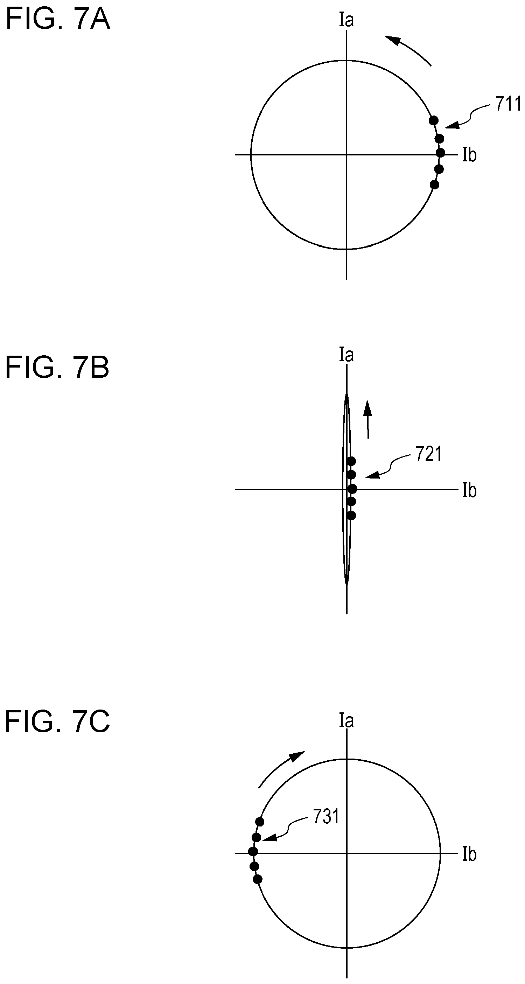

Figs. 7A to 7F are diagrams for explaining a processing example of the sampling means 252 and the arithmetic operation means 253 in a case where a plurality of timings is set by the timing setting means 251 in the driving apparatus 10 for a vibration-type actuator illustrated in Fig. 3. Figs. 7A to 7F illustrate a case where "average processing", according to which an average of a plurality of sign-affixed vibration amounts outputted by the sampling means 252 is outputted, is designated as the arithmetic operation method inputted to the arithmetic operation means 253 from the CPU 210 illustrated in Fig. 3.

Figs. 7A, 7B, and 7C show Lissajous waveforms with the horizontal axis representing the current Ib and the vertical axis representing the current Ia. In Figs. 7A, 7B, and 7C, the arrow indicates the direction of Lissajous rotation. Specifically, Fig. 7A shows a state in which the B-phase amplitude command is +50%, Fig. 7B shows a state in which the B-phase amplitude command is 0%, and Fig. 7C shows a state in which the B-phase amplitude command is -50%. In Figs. 7A, 7B, and 7C, five-point filled-circle symbols 711, 721, and 731 denote five timings set by the timing setting means 251 respectively. Specifically, the timing setting means 251 sets, either at equal time intervals or at equal phase intervals, five points, two of which are before and two of which are after the center one that is the point in time at which the current Ia goes across zero, as the timings denoted by the filled-circle symbols 711 to 731 in Figs. 7A to 7C respectively.

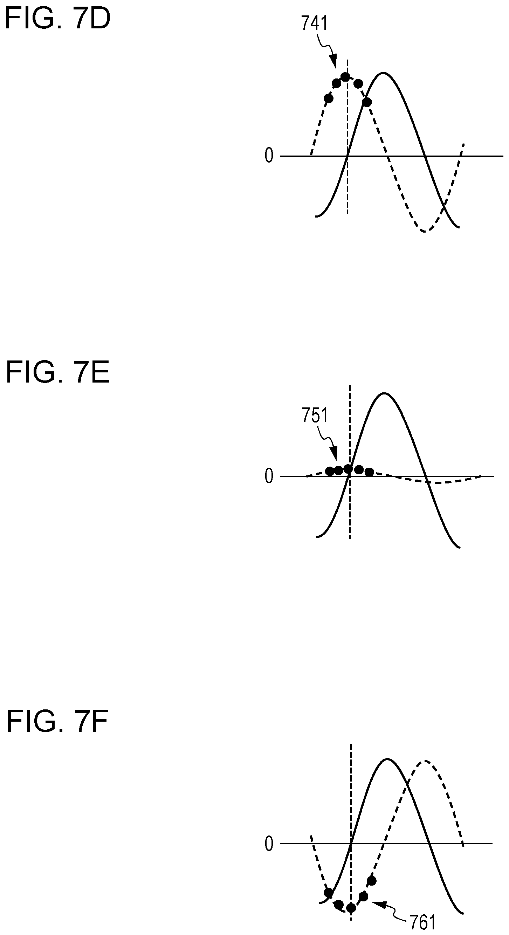

Figs. 7D, 7E, and 7F show the waveforms of the current Ia (solid curve) and the current Ib (dashed curve). Specifically, Fig. 7D shows a state in which the B-phase amplitude command is +50%, Fig. 7E shows a state in which the B-phase amplitude command is 0%, and Fig. 7F shows a state in which the B-phase amplitude command is -50%. The timings denoted by the filled-circle symbols 711 to 731 in Figs. 7A to 7C correspond to the timings denoted by five-point filled-circle symbols 741 to 761 in Figs. 7D to 7F respectively. In Figs. 7D to 7F, the sampling means 252 samples the current Ib (dashed curve) at the above-mentioned timings to acquire the values of the current Ib denoted by the five-point filled-circle symbols 741, 751, and 761 respectively as vibration amounts with plus or minus sign affixed thereto. The arithmetic operation means 253 calculates the vibration vector in the direction of movement of the moving body 120 by performing average processing cyclically for each one cycle or longer on the values obtained by respectively multiplying, by a predetermined coefficient, the five sign-affixed vibration amounts acquired during one cycle of the current Ia at the sampling means 252.

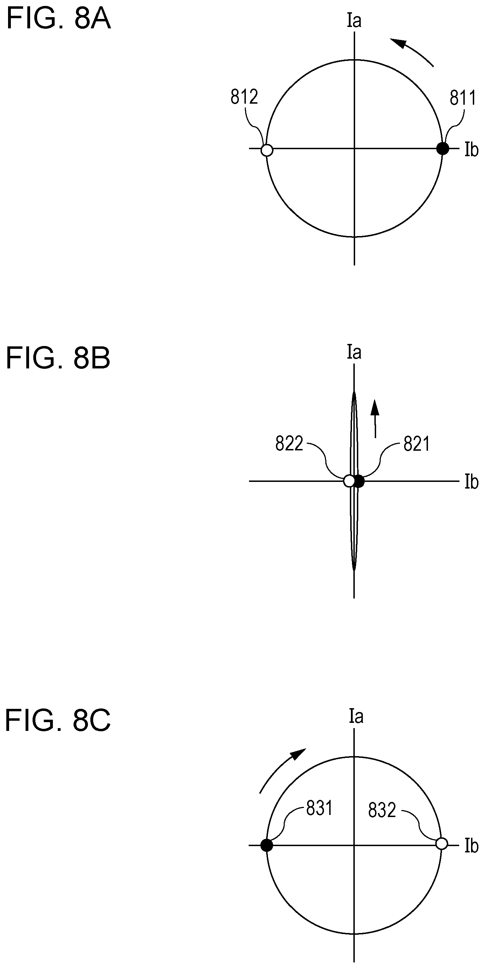

Figs. 8A to 8F are diagrams for explaining a processing example of the sampling means 252 and the arithmetic operation means 253 in a case where a plurality of timings is set by the timing setting means 251 in the driving apparatus 10 for a vibration-type actuator illustrated in Fig. 3. Figs. 8A to 8F illustrate a case where "difference processing", according to which a difference between two sign-affixed vibration amounts outputted by the sampling means 252 during one cycle of the current Ia is outputted, is designated as the arithmetic operation method inputted to the arithmetic operation means 253 from the CPU 210 illustrated in Fig. 3.

Figs. 8A, 8B, and 8C show Lissajous waveforms with the horizontal axis representing the current Ib and the vertical axis representing the current Ia. In Figs. 8A, 8B, and 8C, the arrow indicates the direction of Lissajous rotation. Specifically, Fig. 8A shows a state in which the B-phase amplitude command is +50%, Fig. 8B shows a state in which the B-phase amplitude command is 0%, and Fig. 8C shows a state in which the B-phase amplitude command is -50%. In Figs. 8A, 8B, and 8C, single-point filled-circle symbols 811, 821, and 831 and single-point unfilled-circle symbols 812, 822, and 832 denote two timings set by the timing setting means 251 respectively. Specifically, the timing setting means 251 sets the timing denoted by the filled-circle symbols 811 to 831 at which the current Ia goes across zero from minus to plus and sets the timing denoted by the unfilled-circle symbols 812 to 832 at which the current Ia goes across zero from plus to minus in Figs. 8A to 8C respectively.

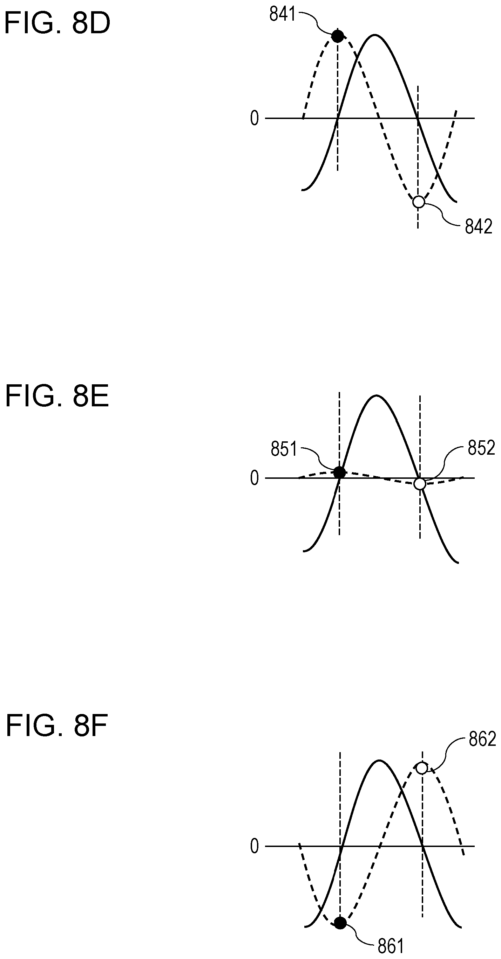

Figs. 8D, 8E, and 8F show the waveforms of the current Ia (solid curve) and the current Ib (dashed curve). Specifically, Fig. 8D shows a state in which the B-phase amplitude command is +50%, Fig. 8E shows a state in which the B-phase amplitude command is 0%, and Fig. 8F shows a state in which the B-phase amplitude command is -50%. The timing denoted by the filled-circle symbols 811 to 831 in Figs. 8A to 8C corresponds to the timing denoted by filled-circle symbols 841 to 861 in Figs. 8D to 8F respectively. The timing denoted by the unfilled-circle symbols 812 to 832 in Figs. 8A to 8C corresponds to the timing denoted by unfilled-circle symbols 842 to 862 in Figs. 8D to 8F respectively. In Figs. 8D to 8F, the sampling means 252 samples the current Ib (dashed curve) at the above-mentioned timings to acquire the values of the current Ib denoted by the filled-circle symbols 841 to 861 and the unfilled-circle symbols 842 to 862 respectively as vibration amounts with plus or minus sign affixed thereto. The arithmetic operation means 253 calculates, as the vibration vector in the direction of movement of the moving body 120, the difference between the two sign-affixed vibration amounts acquired during one cycle of the current Ia at the sampling means 252. For example, the arithmetic operation means 253, when in the state illustrated in Fig. 8D, calculates the difference between the sign-affixed vibration amount denoted by the filled-circle symbol 841 and the sign-affixed vibration amount denoted by the unfilled-circle symbol 842, which are acquired during one cycle of the current Ia, as the vibration vector in the direction of movement of the moving body 120.

In the above explanation, the arithmetic operation method is switched on the basis of the input from the CPU 210 to the arithmetic operation means 253; however, the arithmetic operation method may have been determined in advance, irrespective of the input from the CPU 210.

Both the "average processing" performed by the arithmetic operation means 253 as having been explained using Figs. 7A to 7F and the "difference processing" performed by the arithmetic operation means 253 as having been explained using Figs. 8A to 8F can be paraphrased as processing of calculating a sum after multiplying, by a coefficient having been determined in advance, a plurality of sign-affixed vibration amounts acquired at the sampling means 252. That is, the "average processing" performed by the arithmetic operation means 253 as having been explained using Figs. 7A to 7F can be paraphrased as processing of calculating the above-mentioned sum with the use of a fractional coefficient whose denominator is the number of the plurality of sign-affixed vibration amounts as the coefficient by which the plurality of sign-affixed vibration amounts is multiplied. The "difference processing" performed by the arithmetic operation means 253 as having been explained using Figs. 8A to 8F can be paraphrased as processing of calculating the above-mentioned sum with the use of 1 or -1 as the coefficient by which the plurality of sign-affixed vibration amounts is multiplied.

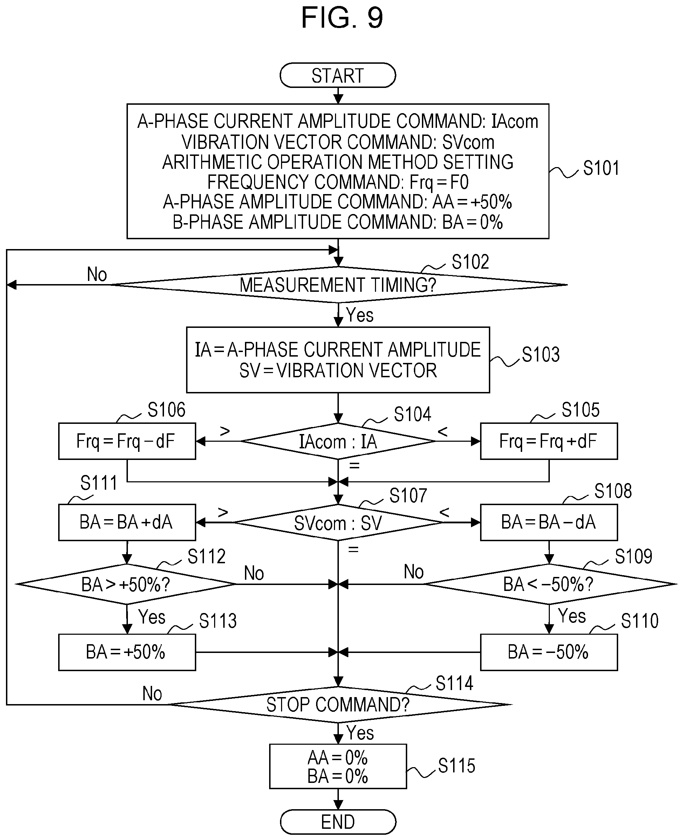

Fig. 9 is a flowchart illustrating an example of processing procedures of a driving method performed by the driving apparatus 10 for a vibration-type actuator illustrated in Fig. 3.

First, in step S101, the CPU 210 sets an A-phase current amplitude command IAcom having been determined in advance, the arithmetic operation method of the arithmetic operation means 253, and a vibration vector command SVcom from non-illustrated commanding means. The CPU 210 further sets a frequency command Frq to F0, which is the frequency at the time of activation, sets an A-phase amplitude command AA to +50%, and sets a B-phase amplitude command BA to 0%.

Next, in step S102, the CPU 210 determines whether the measurement timing has come or not. If it is determined that the measurement timing has not come yet (S102/No), the process waits at step S102.

On the other hand, if the determination result in step S102 is that the measurement timing has come (S102/Yes), the process proceeds to step S103.

Upon proceeding to step S103, the CPU 210 acquires the A-phase current amplitude IA outputted from the amplitude detection means 254 and a vibration vector SV outputted from the arithmetic operation means 253. In the subsequent steps, the A-phase current amplitude IA and the vibration vector SV acquired in step S103 are compared with the A-phase current amplitude command IAcom and the vibration vector command SVcom set in step S101 to perform control of the frequency command Frq and the B-phase amplitude command BA.

First, the control of the frequency command Frq will now be described in step S104 to step S106.

In step S104, the CPU 210 compares the A-phase current amplitude command IAcom set in step S101 and the A-phase current amplitude IA acquired in step S103.

If the comparison result in step S104 is that the A-phase current amplitude command IAcom is less (<) than the A-phase current amplitude IA, the process proceeds to step S105.

Upon proceeding to step S105, the CPU 210 adds a predetermined frequency dF to the frequency command Frq so as to shift the frequency away from the resonant frequency of the vibrating body 110, thereby decreasing the A-phase current amplitude IA.

If the comparison result in step S104 is that the A-phase current amplitude command IAcom is greater (>) than the A-phase current amplitude IA, the process proceeds to step S106.

Upon proceeding to step S106, the CPU 210 subtracts a predetermined frequency dF from the frequency command Frq so as to shift the frequency closer to the resonant frequency of the vibrating body 110, thereby increasing the A-phase current amplitude IA.

The process proceeds to step S107 when the processing in step S105 ends, when the processing in step S106 ends, or if the comparison in step S104 indicates that the A-phase current amplitude command IAcom is equal (=) to the A-phase current amplitude IA. Through repetition of the operations in step S104 to step S106, the frequency command Frq is controlled such that the A-phase current amplitude IA approaches the A-phase current amplitude command IAcom.

Next, the control of the B-phase amplitude command BA will now be described in step S107 to step S113.

In step S107, the CPU 210 compares the vibration vector command SVcom set in step S101 and the vibration vector SV acquired in step S103.

If the comparison result in step S107 is that the vibration vector command SVcom is less (<) than the vibration vector SV, the process proceeds to step S108.

Upon proceeding to step S108, the CPU 210 subtracts a predetermined amplitude dA from the B-phase amplitude command BA.

Next, in step S109, the CPU 210 determines whether the B-phase amplitude command BA is less than -50% or not.

If the determination result in step S109 is that the B-phase amplitude command BA is less than -50% (S109/Yes), the process proceeds to step S110.

Upon proceeding to step S110, the CPU 210 sets the B-phase amplitude command BA to -50%.

If the comparison result in step S107 is that the vibration vector command SVcom is greater (>) than the vibration vector SV, the process proceeds to step S111.

Upon proceeding to step S111, the CPU 210 adds a predetermined amplitude dA to the B-phase amplitude command BA.

Next, in step S112, the CPU 210 determines whether the B-phase amplitude command BA is greater than +50% or not.

If the determination result in step S112 is that the B-phase amplitude command BA is greater than +50% (S112/Yes), the process proceeds to step S113.

Upon proceeding to step S113, the CPU 210 sets the B-phase amplitude command BA to +50%.

The process proceeds to step S114 when the processing in step S110 ends, when the processing in step S113 ends, or if the comparison in step S107 indicates that the vibration vector command SVcom is equal (=) to the vibration vector SV. Through repetition of the operations in step S107 to step S113, the B-phase amplitude command BA is controlled such that the vibration vector SV approaches the vibration vector command SVcom. The CPU 210 performing the operations in step S107 to step S113 constitutes first control means configured to perform amplitude control of the two-phase alternating-current signals PA and PB such that the vibration vector SV follows the vibration vector command SVcom (first vibration target value).

Next, in step S114, the CPU 210 determines whether a stop command has been inputted or not. If it is determined that the stop command has not been inputted (S114/No), the process returns to step S102, and the processing in step S102 and the subsequent steps is performed.

On the other hand, if the determination result in step S114 is that the stop command has been inputted (S114/Yes), the process proceeds to step S115.

Upon proceeding to step S115, the CPU 210 sets the A-phase amplitude command AA and the B-phase amplitude command BA to 0%. This brings the voltage applied to the piezoelectric bodies 1121 to 1124 in the piezoelectric element 112 of the vibration-type actuator 100 to 0 V, and the moving body 120 (rotor) of the vibration-type actuator 100 thus stops.

Then, upon completion of the processing in step S115, the processing in the flowchart illustrated in Fig. 9 ends.

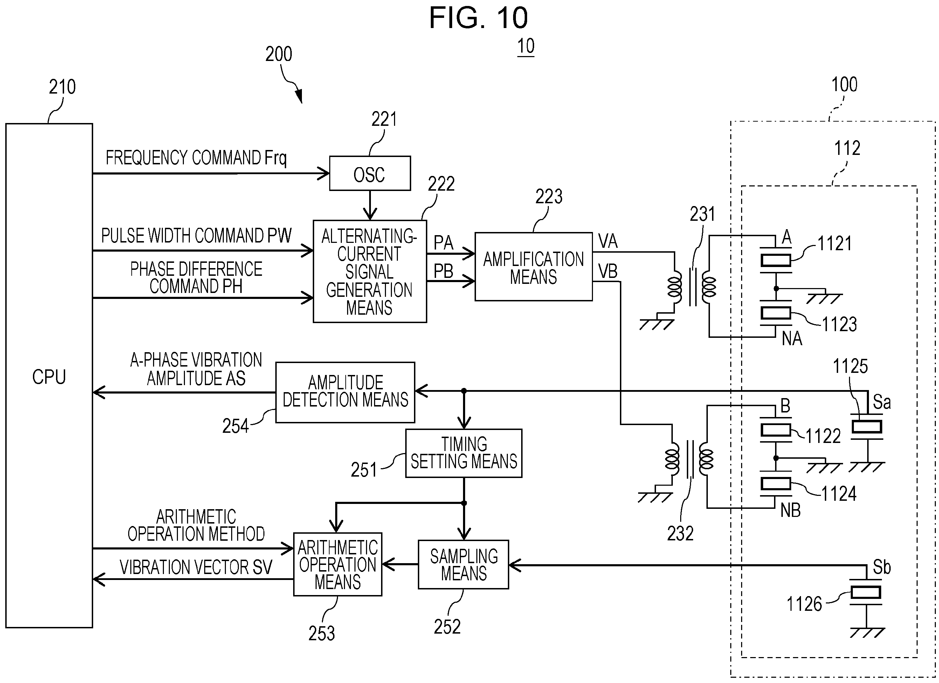

Fig. 10 is a diagram illustrating a second configuration example of the driving apparatus 10 for a vibration-type actuator according to the first embodiment of the present invention. In Fig. 10, the same reference characters are assigned to the components that are the same as those illustrated in Fig. 3, and a detailed explanation of them is omitted.

The driving apparatus 10 for a vibration-type actuator illustrated in Fig. 10 is different from that of Fig. 3 in that the alternating-current signal generation means 222 generates the two-phase alternating-current signals PA and PB on the basis of a pulse width command and a phase difference command from the CPU 210. Specifically, the vibration vector control is performed by means of the B-phase amplitude command in the driving apparatus 10 for a vibration-type actuator illustrated in Fig. 3, whereas this is performed by means of the phase difference command in the driving apparatus 10 for a vibration-type actuator illustrated in Fig. 10. Another difference from Fig. 3 is that, in the driving apparatus 10 for a vibration-type actuator illustrated in Fig. 10, the vibration detection signal Sa from the piezoelectric body 1125 in the piezoelectric element 112 of the vibration-type actuator 100 is inputted to the timing setting means 251 and the amplitude detection means 254. Another difference from Fig. 3 is that, in the driving apparatus 10 for a vibration-type actuator illustrated in Fig. 10, the vibration detection signal Sb from the piezoelectric body 1126 in the piezoelectric element 112 of the vibration-type actuator 100 is inputted to the sampling means 252. Still another difference from Fig. 3 is that, in the driving apparatus 10 for a vibration-type actuator illustrated in Fig. 10, an A-phase vibration amplitude is outputted from the amplitude detection means 254 to the CPU 210.

In the driving apparatus 10 for a vibration-type actuator illustrated in Fig. 10, the piezoelectric body 1125 and the piezoelectric body 1126 correspond respectively to "first vibration detection means" and "second vibration detection means" that detect vibrations of the vibrating body 110 independently of each other. In the driving apparatus 10 for a vibration-type actuator illustrated in Fig. 10, the vibration detection signal Sa corresponds to a first output signal that is an output signal of the piezoelectric body 1125 (first vibration detection means). In the driving apparatus 10 for a vibration-type actuator illustrated in Fig. 10, the vibration detection signal Sb corresponds to a second output signal that is an output signal of the piezoelectric body 1126 (second vibration detection means).

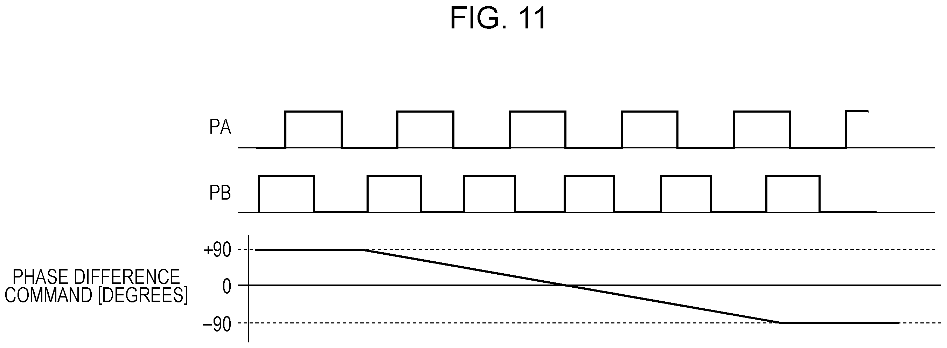

Fig. 11 is a diagram illustrating an example of a relationship between the phase difference command from the CPU 210 and the alternating-current signals PA and PB generated by the alternating-current signal generation means 222 in the driving apparatus 10 for a vibration-type actuator illustrated in Fig. 10. The phase difference command illustrated in Fig. 11 is a signal setting the phase difference of the alternating-current signal PB in relation to the alternating-current signal PA between -90° and +90°. The sign of the phase difference command illustrated in Fig. 11 is plus when the phase of the alternating-current signal PB is ahead of the phase of the alternating-current signal PA by 90°, and is minus when it is behind thereof.

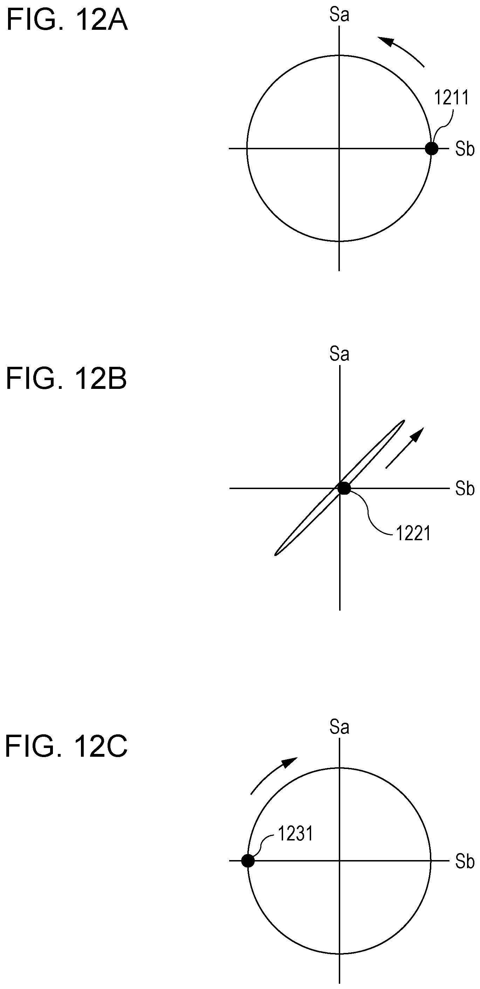

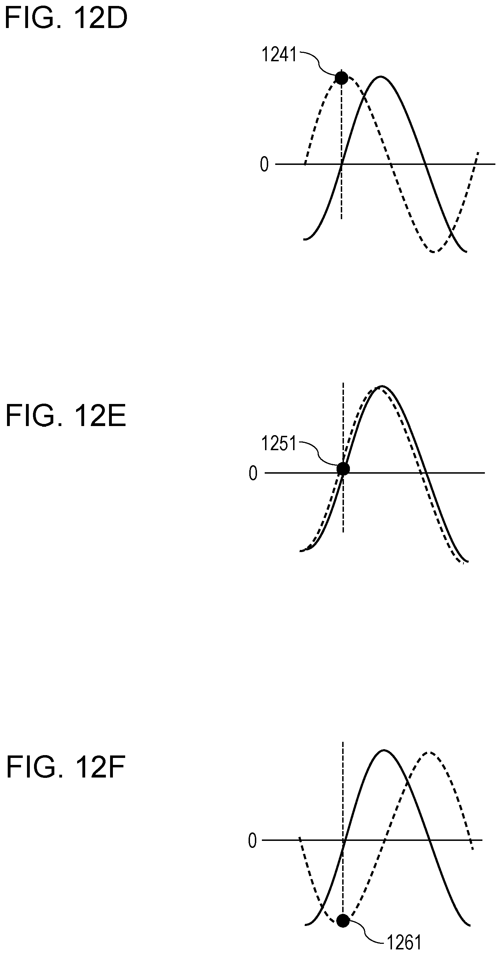

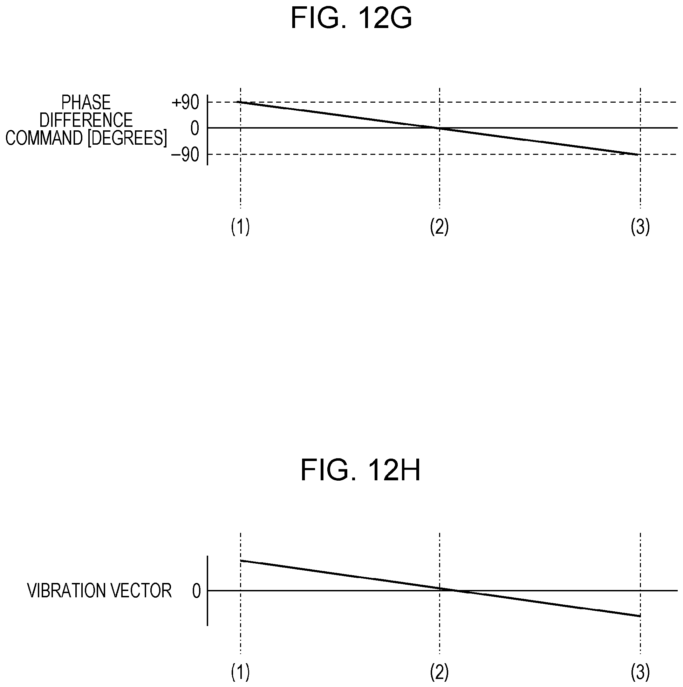

Figs. 12A to 12H are diagrams illustrating an example of a relationship between detected values of the vibration detection signal Sa and the vibration detection signal Sb in relation to the phase difference command from the CPU 210 and the vibration vector outputted by the arithmetic operation means 253, in the driving apparatus 10 for a vibration-type actuator illustrated in Fig. 10. Fig. 12 illustrates a case where "without processing", according to which the output of the sampling means 252 is outputted on an as-is basis, is designated as the arithmetic operation method inputted to the arithmetic operation means 253 from the CPU 210 illustrated in Fig. 10.

Figs. 12A, 12B, and 12C show Lissajous waveforms with the horizontal axis representing the vibration detection signal Sb and the vertical axis representing the vibration detection signal Sa. In Figs. 12A, 12B, and 12C, the arrow indicates the direction of Lissajous rotation. Specifically, Fig. 12A shows a state in which the phase difference command illustrated in Fig. 12G is +90°, Fig. 12B shows a state in which the phase difference command is 0°, and Fig. 12C shows a state in which the phase difference command is -90°. In Figs. 12A, 12B, and 12C, filled-circle symbols 1211, 1221, and 1231 denote the timing set by the timing setting means 251 respectively. Specifically, the timing setting means 251 sets the point in time at which the vibration detection signal Sa goes across zero from minus to plus as the timing denoted by the filled-circle symbols 1211 to 1231 in Figs. 12A to 12C respectively.

Figs. 12D, 12E, and 12F show the waveforms of the vibration detection signal Sa (solid curve) and the vibration detection signal Sb (dashed curve). Specifically, Fig. 12D shows a state in which the phase difference command illustrated in Fig. 12G is +90°, Fig. 12E shows a state in which the phase difference command is 0°, and Fig. 12F shows a state in which the phase difference command is -90°. The timing denoted by the filled-circle symbols 1211 to 1231 in Figs. 12A to 12C corresponds to the timing denoted by filled-circle symbols 1241 to 1261 in Figs. 12D to 12F respectively. In Figs. 12D, 12E, and 12F, the sampling means 252 samples the vibration detection signal Sb (dashed curve) at the above-mentioned timing to acquire the value of the vibration detection signal Sb denoted by each filled-circle symbol 1241 to 1261 as a vibration amount with plus or minus sign affixed thereto.

Fig. 12G shows the value of the phase difference command from the CPU 210 illustrated in Fig. 10. Fig. 12H shows the value, of the vibration vector in the direction of movement of the moving body 120, calculated by the arithmetic operation means 253 on the basis of the sign-affixed vibration amount acquired by the sampling means 252. In the vibration vector illustrated in Fig. 12H, (1) corresponds to a state in which the phase difference command is +90°, (2) corresponds to a state in which the phase difference command is 0°, and (3) corresponds to a state in which the phase difference command is -90°.

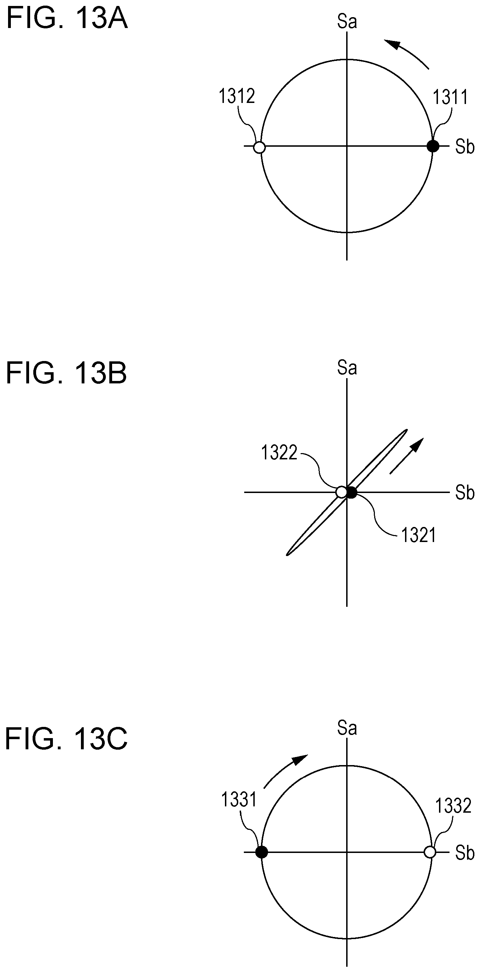

Figs. 13A to 13F are diagrams for explaining a processing example of the sampling means 252 and the arithmetic operation means 253 in a case where a plurality of timings is set by the timing setting means 251 in the driving apparatus 10 for a vibration-type actuator illustrated in Fig. 10. Figs. 13A to 13F illustrate a case where "difference processing", according to which a difference between two sign-affixed vibration amounts outputted by the sampling means 252 during one cycle of the vibration detection signal Sa is outputted, is designated as the arithmetic operation method inputted to the arithmetic operation means 253 from the CPU 210 illustrated in Fig. 10.

Figs. 13A, 13B, and 13C show Lissajous waveforms with the horizontal axis representing the vibration detection signal Sb and the vertical axis representing the vibration detection signal Sa. In Figs. 13A, 13B, and 13C, the arrow indicates the direction of Lissajous rotation. Specifically, Fig. 13A shows a state in which the phase difference command is +90°, Fig. 13B shows a state in which the phase difference command is 0°, and Fig. 13C shows a state in which the phase difference command is -90°. In Figs. 13A, 13B, and 13C, single-point filled-circle symbols 1311, 1321, and 1331 and single-point unfilled-circle symbols 1312, 1322, and 1332 denote two timings set by the timing setting means 251 respectively. Specifically, the timing setting means 251 sets the timing denoted by the filled-circle symbols 1311 to 1331 at which the vibration detection signal Sa goes across zero from minus to plus in Figs. 13A to 13C respectively. In addition, the timing setting means 251 sets the timing denoted by the unfilled-circle symbols 1312 to 1332 at which the vibration detection signal Sa goes across zero from plus to minus in Figs. 13A to 13C respectively.

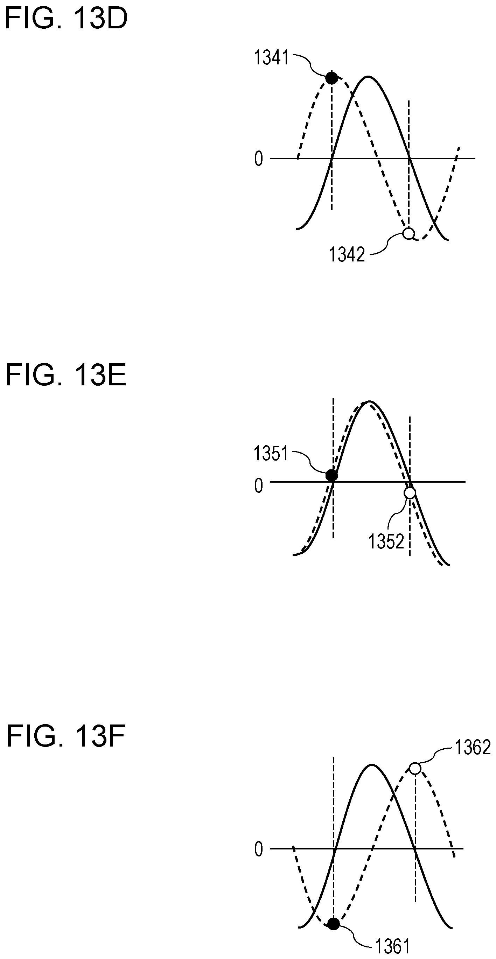

Figs. 13D, 13E, and 13F show the waveforms of the vibration detection signal Sa (solid curve) and the vibration detection signal Sb (dashed curve). Specifically, Fig. 13D shows a state in which the phase difference command is +90°, Fig. 13E shows a state in which the phase difference command is 0°, and Fig. 13F shows a state in which the phase difference command is -90°. The timing denoted by the filled-circle symbols 1311 to 1331 in Figs. 13A to 13C corresponds to the timing denoted by filled-circle symbols 1341 to 1361 in Figs. 13D to 13F respectively. The timing denoted by the unfilled-circle symbols 1312 to 1332 in Figs. 13A to 13C corresponds to the timing denoted by unfilled-circle symbols 1342 to 1362 in Figs. 13D to 13F respectively. The sampling means 252 samples the vibration detection signal Sb (dashed curve) at the above-mentioned timings to acquire the values of the vibration detection signal Sb denoted by the filled-circle symbols 1341 to 1361 and the unfilled-circle symbols 1342 to 1362 respectively as vibration amounts with plus or minus sign affixed thereto. The arithmetic operation means 253 calculates, as the vibration vector in the direction of movement of the moving body 120, the difference between the two sign-affixed vibration amounts acquired during one cycle of the vibration detection signal Sa at the sampling means 252.

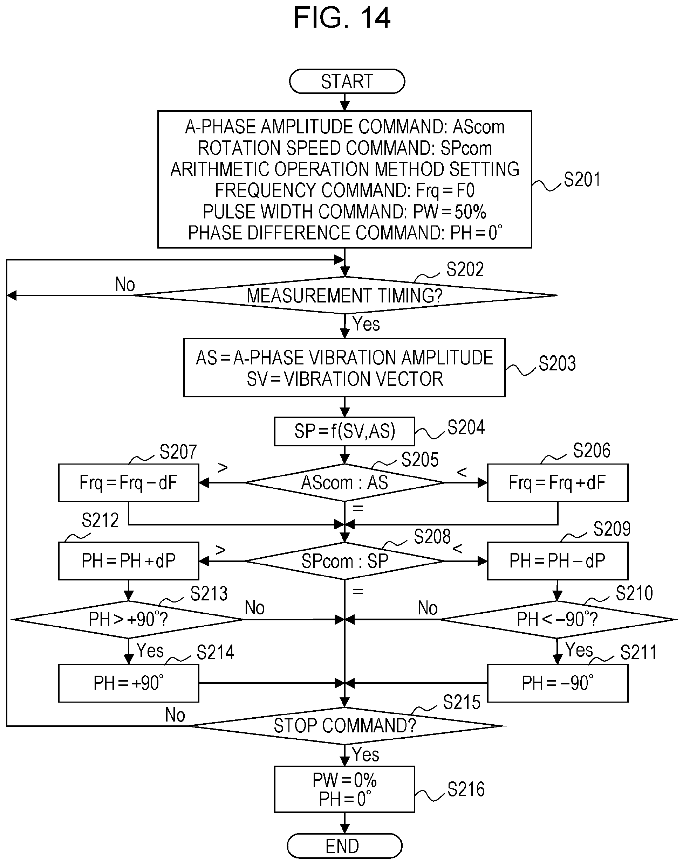

Fig. 14 is a flowchart illustrating an example of processing procedures of a driving method performed by the driving apparatus 10 for a vibration-type actuator illustrated in Fig. 10.

First, in step S201, the CPU 210 sets an A-phase amplitude command AScom having been determined in advance, the arithmetic operation method of the arithmetic operation means 253, and a rotation speed command SPcom from non-illustrated commanding means. The CPU 210 further sets the frequency command Frq to F0, which is the frequency at the time of activation, sets a pulse width command PW to 50%, and sets a phase difference command PH to 0°.

Next, in step S202, the CPU 210 determines whether the measurement timing has come or not. If it is determined that the measurement timing has not come yet (S202/No), the process waits at step S202.

On the other hand, if the determination result in step S202 is that the measurement timing has come (S202/Yes), the process proceeds to step S203.

Upon proceeding to step S203, the CPU 210 acquires an A-phase vibration amplitude AS outputted from the amplitude detection means 254 and the vibration vector SV outputted from the arithmetic operation means 253.

Next, in step S204, by means of a function f defined by a data table, a calculating formula, or the like, the CPU 210 calculates a rotation speed SP of the moving body 120 (rotor) from the values of the vibration vector SV and the A-phase vibration amplitude AS acquired in step S203. In the subsequent steps, the A-phase vibration amplitude AS and the rotation speed SP described above are compared with the A-phase vibration amplitude command AScom and the rotation speed command SPcom set in step S201 to perform control of the frequency command Frq and the phase difference command PH.

First, the control of the frequency command Frq will now be described in step S205 to step S207.

In step S205, the CPU 210 compares the A-phase vibration amplitude command AScom set in step S201 and the A-phase vibration amplitude AS acquired in step S203.

If the comparison result in step S205 is that the A-phase vibration amplitude command AScom is less (<) than the A-phase vibration amplitude AS, the process proceeds to step S206.

Upon proceeding to step S206, the CPU 210 adds a predetermined frequency dF to the frequency command Frq so as to shift the frequency away from the resonant frequency of the vibrating body 110, thereby decreasing the A-phase vibration amplitude AS.

If the comparison result in step S205 is that the A-phase vibration amplitude command AScom is greater (>) than the A-phase vibration amplitude AS, the process proceeds to step S207.

Upon proceeding to step S207, the CPU 210 subtracts a predetermined frequency dF from the frequency command Frq so as to shift the frequency closer to the resonant frequency of the vibrating body 110, thereby increasing the A-phase vibration amplitude AS.

The process proceeds to step S208 when the processing in step S206 ends, when the processing in step S207 ends, or if the comparison in step S205 indicates that the A-phase vibration amplitude command AScom is equal (=) to the A-phase vibration amplitude AS. Through repetition of the operations in step S205 to step S207, the frequency command Frq is controlled such that the A-phase vibration amplitude AS approaches the A-phase vibration amplitude command AScom.

Next, the control of the phase difference command PH will now be described in step S208 to step S214.

In step S208, the CPU 210 compares the rotation speed command SPcom set in step S201 and the rotation speed SP calculated in step S204.

If the comparison result in step S208 is that the rotation speed command SPcom is less (<) than the rotation speed SP, the process proceeds to step S209.

Upon proceeding to step S209, the CPU 210 subtracts a predetermined phase dP from the phase difference command PH.

Next, in step S210, the CPU 210 determines whether the phase difference command PH is less than -90° or not.

If the determination result in step S210 is that the phase difference command PH is less than -90° (S210/Yes), the process proceeds to step S211.

Upon proceeding to step S211, the CPU 210 sets the phase difference command PH to -90°.

If the comparison result in step S208 is that the rotation speed command SPcom is greater (>) than the rotation speed SP, the process proceeds to step S212.

Upon proceeding to step S212, the CPU 210 adds a predetermined phase dP to the phase difference command PH.

Next, in step S213, the CPU 210 determines whether the phase difference command PH is greater than +90° or not.

If the determination result in step S213 is that the phase difference command PH is greater than +90° (S213/Yes), the process proceeds to step S214.

Upon proceeding to step S214, the CPU 210 sets the phase difference command PH to +90°.

The process proceeds to step S215 when the processing in step S211 ends, when the processing in step S214 ends, or if the comparison in step S208 indicates that the rotation speed command SPcom is equal (=) to the rotation speed SP. Through repetition of the operations in step S208 to step S214, the phase difference command PH is controlled such that the rotation speed SP approaches the rotation speed command SPcom.

Next, in step S215, the CPU 210 determines whether a stop command has been inputted or not. If it is determined that the stop command has not been inputted (S215/No), the process returns to step S202, and the processing in step S202 and the subsequent steps is performed.

On the other hand, if the determination result in step S215 is that the stop command has been inputted (S215/Yes), the process proceeds to step S216.

Upon proceeding to step S216, the CPU 210 sets the pulse width command PW to 0% and sets the phase difference command PH to 0°. This brings the voltage applied to the piezoelectric bodies 1121 to 1124 in the piezoelectric element 112 of the vibration-type actuator 100 to 0 V, and the moving body 120 (rotor) of the vibration-type actuator 100 thus stops.

Then, upon completion of the processing in step S216, the processing in the flowchart illustrated in Fig. 14 ends.

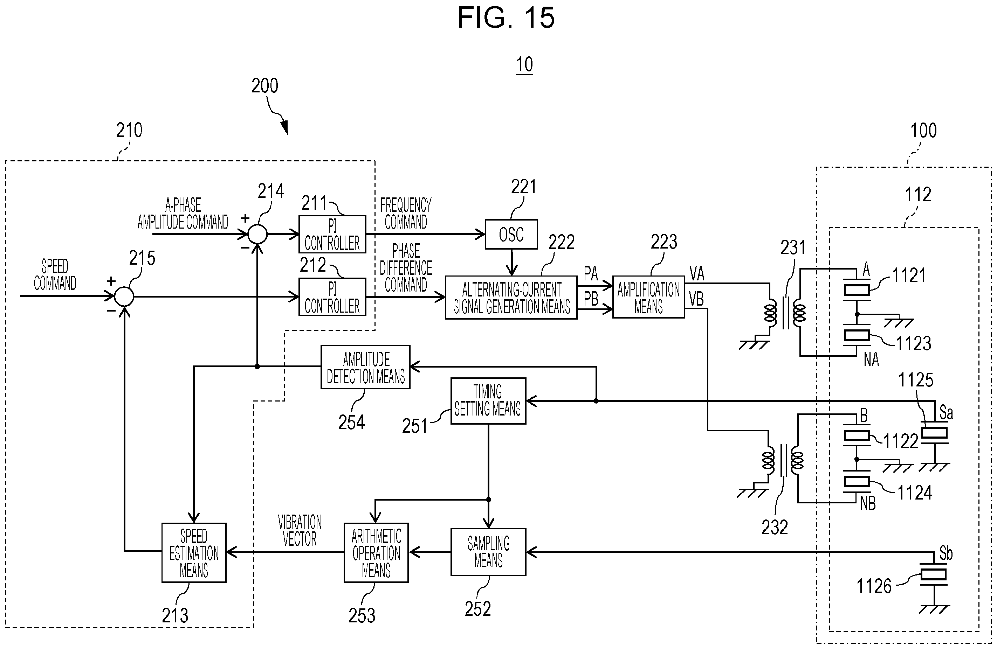

Fig. 15 is a diagram illustrating a third configuration example of the driving apparatus 10 for a vibration-type actuator according to the first embodiment of the present invention. In Fig. 15, the same reference characters are assigned to the components that are the same as those illustrated in Figs. 3 and 10, and a detailed explanation of them is omitted.

Fig. 15 depicting the driving apparatus 10 for a vibration-type actuator provides, mainly, a detailed illustration of the internal configuration of the CPU 210 in the driving apparatus 10 for a vibration-type actuator illustrated in Fig. 10.

In the driving apparatus 10 for a vibration-type actuator illustrated in Fig. 15, the CPU 210 includes a PI controller 211, a PI controller 212, speed estimation means 213, comparison means 214, and comparison means 215. Specifically, in the driving apparatus 10 for a vibration-type actuator illustrated in Fig. 15, the setting operations for the frequency command Frq and the phase difference command PH in the flowchart illustrated in Fig. 14 are performed by the PI controller 211 and the PI controller 212 respectively.

In the arithmetic operation means 253 illustrated in Fig. 15, for example, the "difference processing" illustrated in Figs. 13A to 13F is designated as the arithmetic operation method that has been determined in advance. Specifically, in the arithmetic operation means 253 illustrated in Fig. 15, the arithmetic operation method is set such that the vibration vector changes substantially in proportion to the rotation speed of the moving body 120 (rotor).

The speed estimation means 213 illustrated in Fig. 15 is a constituent unit that estimates the speed of the moving body 120 by multiplying the vibration vector outputted from the arithmetic operation means 253 by a gain set according to the value of the A-phase vibration amplitude outputted from the amplitude detection means 254.

The comparison means 215 illustrated in Fig. 15 and the PI controller 212 configured to perform proportional integral computation constitute a speed control system. The comparison means 215 and the PI controller 212 illustrated in Fig. 15 control a phase difference between the alternating-current signal VA and the alternating-current signal VB such that the speed outputted by the speed estimation means 213 follows a speed command from non-illustrated commanding means.

Based on an A-phase amplitude command from non-illustrated commanding means, the comparison means 214 and the PI controller 211 illustrated in Fig. 15 perform frequency control of the alternating-current signals VA and VB such that the amplitude of the vibration detection signal Sa matches the A-phase amplitude command. Specifically, the PI controller 211 illustrated in Fig. 15 constitutes second control means configured to perform frequency control of the two-phase alternating-current signals such that the A-phase vibration amplitude detected by the amplitude detection means 254 follows the A-phase amplitude command (second vibration target value).

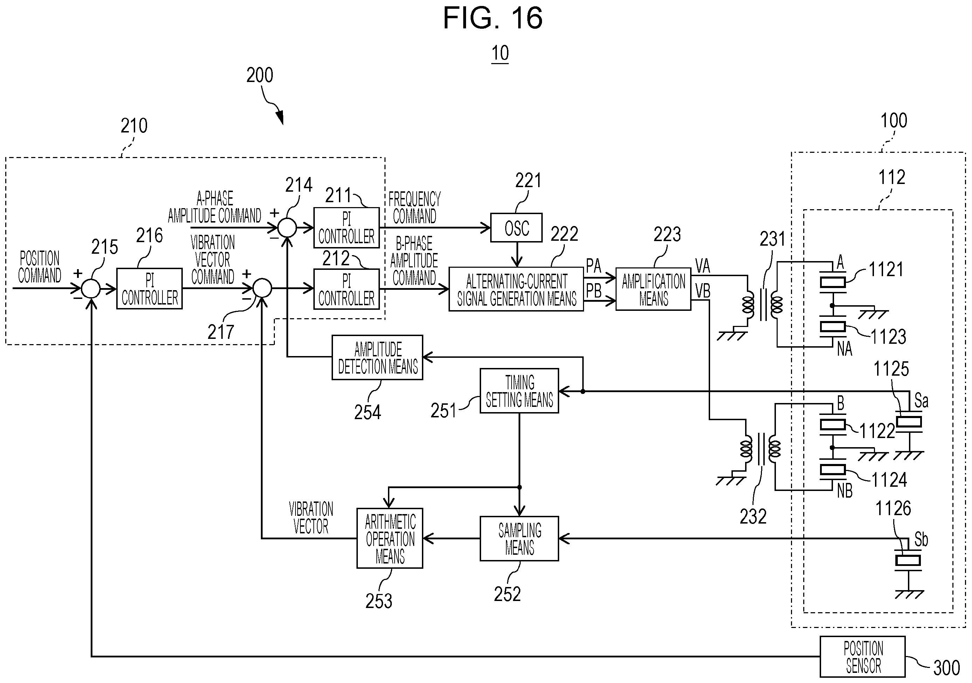

Fig. 16 is a diagram illustrating a fourth configuration example of the driving apparatus 10 for a vibration-type actuator according to the first embodiment of the present invention. In Fig. 16, the same reference characters are assigned to the components that are the same as those illustrated in Figs. 3, 10, and 15, and a detailed explanation of them is omitted.

The driving apparatus 10 for a vibration-type actuator illustrated in Fig. 16 includes the vibration-type actuator 100, the control device 200, and a position sensor 300. The driving apparatus 10 for a vibration-type actuator illustrated in Fig. 16 has a configuration according to which the control of a vibration vector is inserted for minor looping of position control using the position sensor 300. Specifically, the position sensor 300 is a sensor that detects the rotation position of the moving body 120 (rotor) of the vibration-type actuator 100.

In the driving apparatus 10 for a vibration-type actuator illustrated in Fig. 16, the CPU 210 includes the PI controller 211, the PI controller 212, the comparison means 214, the comparison means 215, a PI controller 216, and comparison means 217.

The comparison means 215 illustrated in Fig. 16 is a constituent unit that compares a position command from non-illustrated commanding means and the rotation position of the moving body 120 (rotor) detected by the position sensor 300, and outputs a position deviation to the PI controller 216. The PI controller 216 illustrated in Fig. 16 is a constituent unit that performs proportional integral computation on an input of the position deviation from the comparison means 215, and outputs a vibration vector command to the comparison means 217. Specifically, the PI controller 216 illustrated in Fig. 16 determines the vibration vector command (first vibration target value) such that the position of the moving body 120 detected by the position sensor 300 (the position of a member connected directly or indirectly to the moving body 120) follows the desired position (predetermined position). The comparison means 217 illustrated in Fig. 16 is a constituent unit that compares the vibration vector command outputted from the PI controller 216 and the value of the vibration vector outputted from the arithmetic operation means 253, and outputs a vibration vector deviation to the PI controller 212. The PI controller 212 illustrated in Fig. 16 performs proportional integral computation on an input of the vibration vector deviation from the comparison means 217, and outputs a B-phase amplitude command to the alternating-current signal generation means 222.

With regard to the alternating-current signals outputted by the alternating-current signal generation means 222 illustrated in Fig. 16, the pulse width and phase of the alternating-current signal PB are set as illustrated in Fig. 4 by means of the B-phase amplitude command outputted by the PI controller 212. As a result, the Lissajous waveform of vibrations generated at the contact portion of the vibrating body 110 and the moving body 120 (rotor) changes as illustrated in Figs. 6A to 6H, and the rotation speed and rotation direction of the moving body 120 (rotor) are thus controlled.
Then, the rotation position of the moving body 120 (rotor) is controlled in such a way as to follow the position command from the non-illustrated commanding means. Inserting the control of a vibration vector as a minor loop in this way makes it possible to control the vibrations of the vibrating body 110 at a high speed without being influenced by a mechanism that includes the position sensor 300. As compared with a case without the above-described minor loop, high-speed position control is realized stably.

In the present embodiment, the resistor 241 and the resistor 242 or the piezoelectric body 1125 and the piezoelectric body 1126 are used as the "first vibration detection means" and the "second vibration detection means" that detect vibrations of the vibrating body 110 independently of each other; however, this does not imply any limitation. For example, an optical sensor or the like may be used as vibration detection means configured to detect vibrations of the vibrating body 110.

Though the vibration-type actuator 100 using two different out-of-plane-directional flexural vibrations is applied to the present embodiment, effects similar to those of the present embodiment can be obtained also in a case where a vibration-type actuator using vibrations of two different modes is applied thereto. For example, even in a case of a vibration-type actuator using a verticalvibration-plus-torsional-vibration scheme, a verticalvibration-plus-bending-vibration scheme, or the like, it is possible to detect a vibration vector and perform control similarly to the present embodiment by detecting vibrations in each mode individually.

In the present embodiment, the alternating-current signal generation means 222 generates the two-phase alternating-current signals PA and PB, and the amplification means 223 amplifies these two-phase alternating-current signals to output two-phase drive voltages that are to be applied to the vibrating body 110; however, the present invention is not limited to this embodiment. For example, an embodiment according to which the alternating-current signal generation means 222 generates three-or-more-phase alternating-current signals, and the amplification means 223 amplifies these three-or-more-phase alternating-current signals to output three-or-more-phase drive voltages that are to be applied to the vibrating body 110 can also be applied to the present invention. That is, in the present invention, it is sufficient as long as the alternating-current signal generation means 222 generates two-or-more-phase alternating-current signals, and the amplification means 223 amplifies these two-or-more-phase alternating-current signals to output two-or-more-phase drive voltages that are to be applied to the vibrating body 110.

As explained above, in the driving apparatus 10 for a vibration-type actuator according to the first embodiment, the alternating-current signal generation means 222 generates the two-phase alternating-current signals PA and PB, and the amplification means 223 amplifies these two-phase alternating-current signals to output two-phase drive voltages that are to be applied to the vibrating body 110. The driving apparatus 10 for a vibration-type actuator according to the first embodiment includes the resistor 241 and the resistor 242 or the piezoelectric body 1125 and the piezoelectric body 1126 as the first vibration detection means and the second vibration detection means that detect vibrations of the vibrating body 110 independently of each other. In the driving apparatus 10 for a vibration-type actuator according to the first embodiment, based on the first output signal, which is the signal outputted from the first vibration detection means, the timing setting means 251 sets the timing of detection by the second vibration detection means. Next, in the driving apparatus 10 for a vibration-type actuator according to the first embodiment, the sampling means 252 acquires a sign-affixed vibration amount by sampling the second output signal, which is the signal outputted from the second vibration detection means, at the timing set by the timing setting means 251. Then, in the driving apparatus 10 for a vibration-type actuator according to the first embodiment, based on the sign-affixed vibration amount acquired by the sampling means 252, the arithmetic operation means 253 calculates a vibration vector in the direction of movement of the moving body 120.

With the above-described configuration, in the vibration-type actuator 100 that includes the vibrating body 110 and the moving body 120, it is possible to detect a vibration state of the vibrating body 110 properly also in a region where the direction of movement of the moving body 120 is inverted. This improves, for example, precision in estimating the speed of the moving body 120 in a speed region including the inversion of the direction of movement of the moving body 120. Moreover, it is possible to configure the control device 200 that has high immediate responsiveness by using a vibration vector control system as a minor loop of a control system configured to control the position, speed, and force of the vibration-type actuator 100, for example. Furthermore, configuring the first vibration detection means and the second vibration detection means that detect vibrations of the vibrating body 110 independently of each other by means of the resistor 241 and the resistor 242 or the piezoelectric body 1125 and the piezoelectric body 1126 realizes the vibration detection means at low cost.

### (Second Embodiment)

Next, a second embodiment will now be described. In the second embodiment described below, description of matters that are the same as those having been described in the first embodiment above will be omitted, and the focus of description will be on matters that are different from those having been described in the first embodiment above.

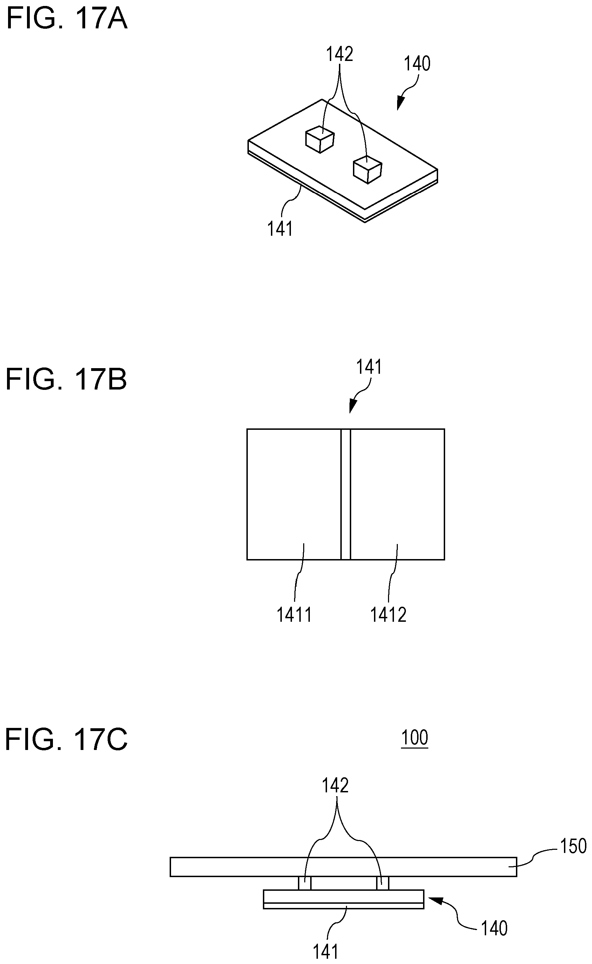

Figs. 17A to 17E are diagrams illustrating an example of a schematic configuration and vibration shapes of a vibration-type actuator 100 according to a second embodiment of the present invention. With reference to Figs. 17A to 17E, a schematic configuration and an operation principle of the vibration-type actuator 100 according to the second embodiment will now be described.

As illustrated in Fig. 17C, the vibration-type actuator 100 according to the second embodiment includes a vibrating body 140 and a moving body 150. The vibrating body 140 is a plate-shaped vibrating body made of a conductive material, and includes, as illustrated in Figs. 17A and 17C, a piezoelectric element 141, and, on a plate surface, two protrusions 142 that are in contact with the moving body 150. The piezoelectric element 141 is a constituent unit that is a part of the vibrating body 140 and awakes vibrations of the vibrating body 140.

As illustrated in Fig. 17B, two electrodes 1411 and 1412 are formed on a surface of the piezoelectric element 141. Two alternating voltages whose phases change independently of each other are applied to the two electrodes 1411 and 1412, between which electric insulation is provided.

The back of the piezoelectric element 141 is configured as electrodes throughout the entire face, and a current can be applied from the front of the piezoelectric element 141 through non-illustrated via holes provided at a part of the electrode 1411 and a part of the electrode 1412. In the description below, the electrode 1411 and the electrode 1412 will be referred to as a piezoelectric body 1411 and a piezoelectric body 1412 respectively.

The moving body 150 illustrated in Fig. 17C is a slider that is in press contact with the protrusions 142 of the vibrating body 140 with a constant pressing force by means of a non-illustrated pressing mechanism. The moving body 150 (slider) is configured to move relatively due to vibrations excited in the vibrating body 140.

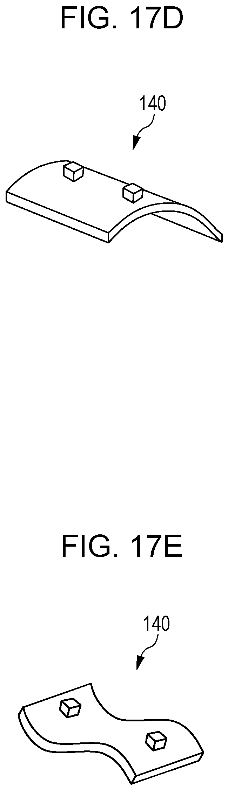

Figs. 17D and 17E are diagrams each illustrating an example of the vibration mode of the vibrating body 140.

Specifically, Fig. 17D illustrates a vibration shape of the vibrating body 140 according to a vibration mode of vibrations excited in the vibrating body 140 when alternating voltages of the same phase are applied to the piezoelectric body 1411 and the piezoelectric body 1412. Fig. 17E illustrates a vibration shape of the vibrating body 140 according to a vibration mode of vibrations excited in the vibrating body 140 when alternating voltages of opposite phases are applied to the piezoelectric body 1411 and the piezoelectric body 1412. That is, when the phase difference between the alternating voltages applied to the piezoelectric body 1411 and the piezoelectric body 1412 of the vibrating body 140 is 0°, vibrations according to the vibration mode illustrated in Fig. 17D are excited. When the phase difference between the alternating voltages applied to the piezoelectric body 1411 and the piezoelectric body 1412 of the vibrating body 140 is 180°, vibrations according to the vibration mode illustrated in Fig. 17E are excited. Furthermore, when the phase difference between the alternating voltages applied to the piezoelectric body 1411 and the piezoelectric body 1412 of the vibrating body 140 is any phase other than 0° and 180° (actually, a range of ±120° is used), both of the vibration modes illustrated in Figs. 17D and 17E are excited simultaneously. In this case, the moving body 150 (slider) that is in press contact with the protrusions 142 provided in the vibrating body 140 moves in the longer-side direction of the rectangle of the vibrating body 140.

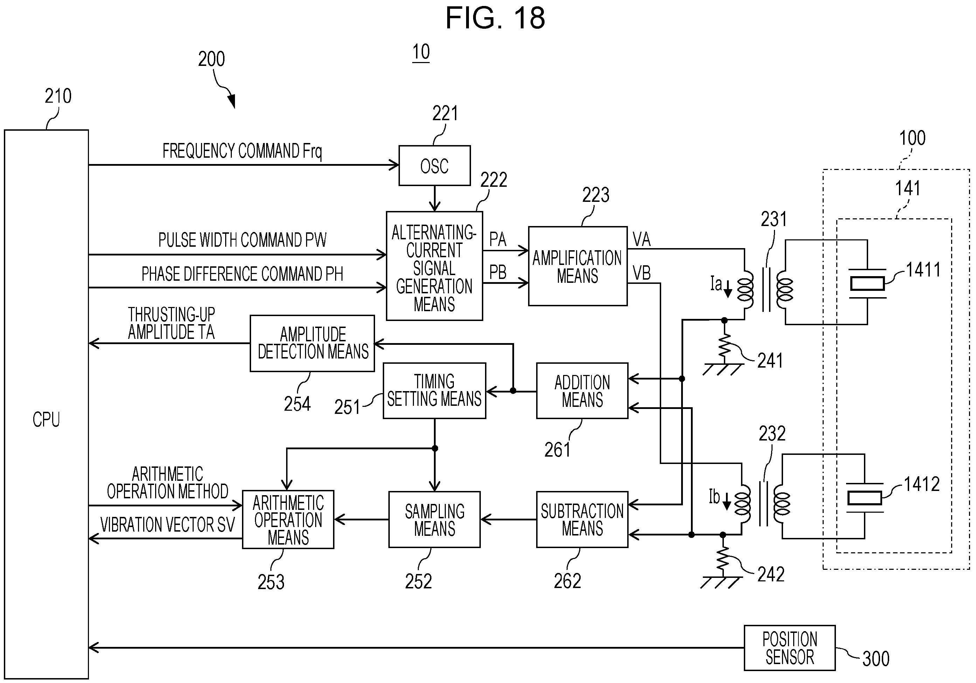

Fig. 18 is a diagram illustrating a first configuration example of a driving apparatus 10 for a vibration-type actuator according to the second embodiment of the present invention. In Fig. 18, the same reference characters are assigned to the components that are the same as those illustrated in Figs. 3, 10, 15, and 16, and a detailed explanation of them is omitted.

The driving apparatus 10 for a vibration-type actuator illustrated in Fig. 18 includes the vibration-type actuator 100, the control device 200, and the position sensor 300. Specifically, in Fig. 18, only the piezoelectric element 141 illustrated in Figs. 17A to 17E is illustrated inside the vibration-type actuator 100, and only the piezoelectric bodies 1411 and 1412 illustrated in Figs. 17A to 17E are illustrated inside the piezoelectric element 141.

The control device 200 illustrated in Fig. 18 includes the CPU 210, the oscillator 221, the alternating-current signal generation means 222, the amplification means 223, the timing setting means 251, the sampling means 252, the arithmetic operation means 253, and the amplitude detection means 254. The control device 200 illustrated in Fig. 18 further includes the transformers 231 and 232, the resistors 241 and 242, addition means 261, and subtraction means 262.

To the piezoelectric bodies 1411 and 1412 in the piezoelectric element 141 of the vibration-type actuator 100, alternating voltages amplified from the alternating-current signal VA and the alternating-current signal VB from the amplification means 223 at the transformer 231 and the transformer 232 are applied respectively as drive voltages.

The inductance values of the transformer 231 and the transformer 232 on the secondary side are frequency-matched with the damping capacitances of the piezoelectric bodies 1411 and 1412. The values of the primary-side current Ia and the primary-side current Ib flowing through the transformer 231 and the transformer 232 respectively are approximately proportional to the value of a mechanical arm current flowing through the piezoelectric bodies 1411 and 1412. In the driving apparatus 10 for a vibration-type actuator illustrated in Fig. 18, the resistor 241 and the resistor 242 correspond respectively to "first vibration detection means" and "second vibration detection means" that detect vibrations of the vibrating body 140 independently of each other. In the driving apparatus 10 for a vibration-type actuator illustrated in Fig. 18, the current Ia corresponds to a first output signal that is an output signal of the resistor 241 (first vibration detection means). In the driving apparatus 10 for a vibration-type actuator illustrated in Fig. 18, the current Ib corresponds to a second output signal that is an output signal of the resistor 242 (second vibration detection means).

The addition means 261 is a constituent unit that adds a voltage waveform of the current Ia having been converted into a voltage at the resistor 241 and a voltage waveform of the current Ib having been converted into a voltage at the resistor 242, and outputs a current Ia+Ib. The output waveform of the addition means 261 represents the vibration state illustrated in Fig. 17D, that is, a state of vibrations that thrust the moving body 150 (slider) and the vibrating body 140 up (vibrations in a thrusting-up direction). Then, the amplitude detection means 254 detects the amplitude of the vibrations in the thrusting-up direction, that is, the amplitude of the output signal (current Ia+Ib) of the addition means 261, and outputs it as a thrusting-up amplitude TA to the CPU 210. The timing setting means 251 sets the timing by using the output signal (current Ia+Ib) of the addition means 261.

The subtraction means 262 is a constituent unit that subtracts the voltage waveform of the current Ib having been converted into a voltage at the resistor 242 from the voltage waveform of the current Ia having been converted into a voltage at the resistor 241, and outputs a current Ia-Ib. The output waveform of the subtraction means 262 represents the vibration state illustrated in Fig. 17E, that is, a vibration state including vibrations in the direction of movement of the moving body 150 (slider) (vibrations in a feed direction). The sampling means 252 acquires a sign-affixed vibration amount by performing sampling using the output signal (current Ia-Ib) of the subtraction means 262. Then, based on the sign-affixed vibration amount acquired by the sampling means 252, the arithmetic operation means 253 calculates a vibration vector in the direction of movement of the moving body 150 (slider).

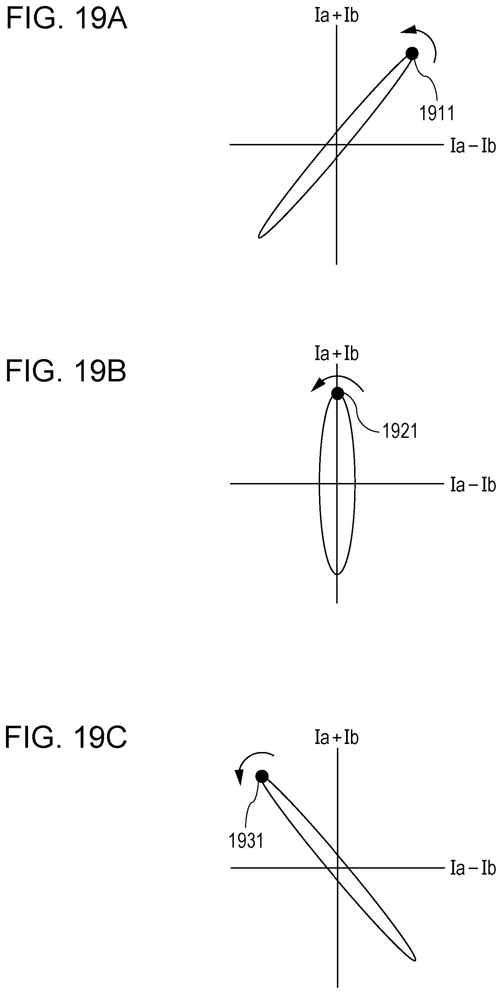

Figs. 19A to 19H are diagrams illustrating an example of a relationship between detected values of the current Ia+Ib and the current Ia-Ib in relation to the phase difference command from the CPU 210 and the vibration vector outputted by the arithmetic operation means 253, in the driving apparatus 10 for a vibration-type actuator illustrated in Fig. 18. Figs. 19A to 19H illustrate a case where "without processing", according to which the output of the sampling means 252 is outputted on an as-is basis, is designated as the arithmetic operation method inputted to the arithmetic operation means 253 from the CPU 210 illustrated in Fig. 18.

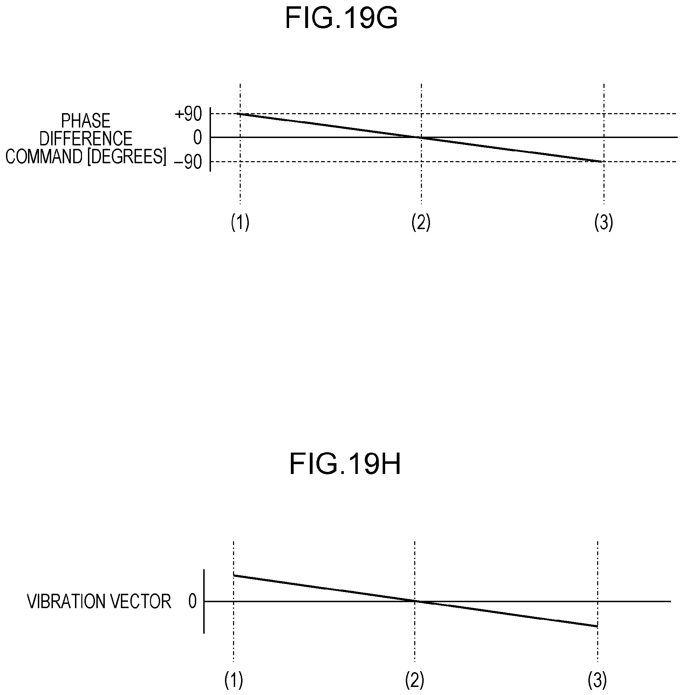

Figs. 19A, 19B, and 19C show Lissajous waveforms with the horizontal axis representing the current Ia-Ib and the vertical axis representing the current Ia+Ib. In Figs. 19A, 19B, and 19C, the arrow indicates the direction of Lissajous rotation. Specifically, Fig. 19A shows a state in which the phase difference command illustrated in Fig. 19G is +90°, Fig. 19B shows a state in which the phase difference command is 0°, and Fig. 19C shows a state in which the phase difference command is -90°. In Figs. 19A, 19B, and 19C, filled-circle symbols 1911, 1921, and 1931 denote the timing set by the timing setting means 251 respectively.

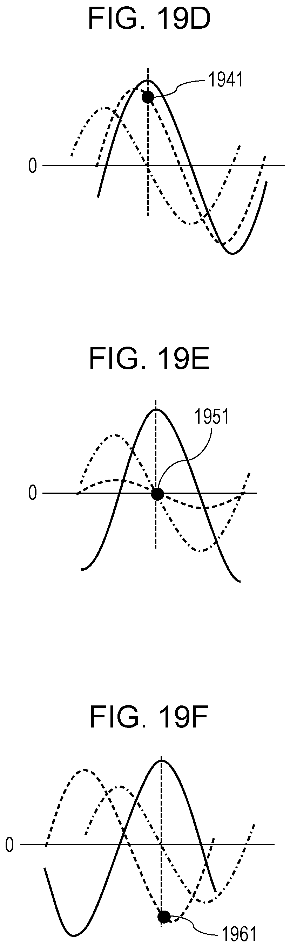

Figs. 19D, 19E, and 19F show the waveforms of the current Ia+Ib (solid curve), the current Ia-Ib (dashed curve), and the differential of the current Ia+Ib (alternate-long-and-short-dash curve). Specifically, Fig. 19D shows a state in which the phase difference command illustrated in Fig. 12G is +90°, Fig. 19E shows a state in which the phase difference command is 0°, and Fig. 19F shows a state in which the phase difference command is -90°. The timing setting means 251 sets the point in time at which the differentiation waveform of the current Ia+Ib (alternate-long-and-short-dash curve) illustrated in Figs. 19D to 19F goes across zero from plus to minus as the timing denoted by the filled-circle symbols 1911 to 1931 in Figs. 19A to 19C respectively. The timing denoted by the filled-circle symbols 1911 to 1931 in Figs. 19A to 19C corresponds to the timing denoted by filled-circle symbols 1941 to 1961 in Figs. 19D to 19F respectively. In Figs. 19D to 19F, the sampling means 252 samples the current Ia-Ib (dashed curve) at the above-mentioned timing to acquire the value of the current Ia-Ib denoted by each filled-circle symbol 1941 to 1961 as a vibration amount with plus or minus sign affixed thereto.

Fig. 19G shows the value of the phase difference command from the CPU 210 illustrated in Fig. 18. Fig. 19H shows the value, of the vibration vector in the direction of movement of the moving body 150, calculated by the arithmetic operation means 253 on the basis of the sign-affixed vibration amount acquired by the sampling means 252. In the vibration vector illustrated in Fig. 19H, (1) corresponds to a state in which the phase difference command is +90°, (2) corresponds to a state in which the phase difference command is 0°, and (3) corresponds to a state in which the phase difference command is -90°.

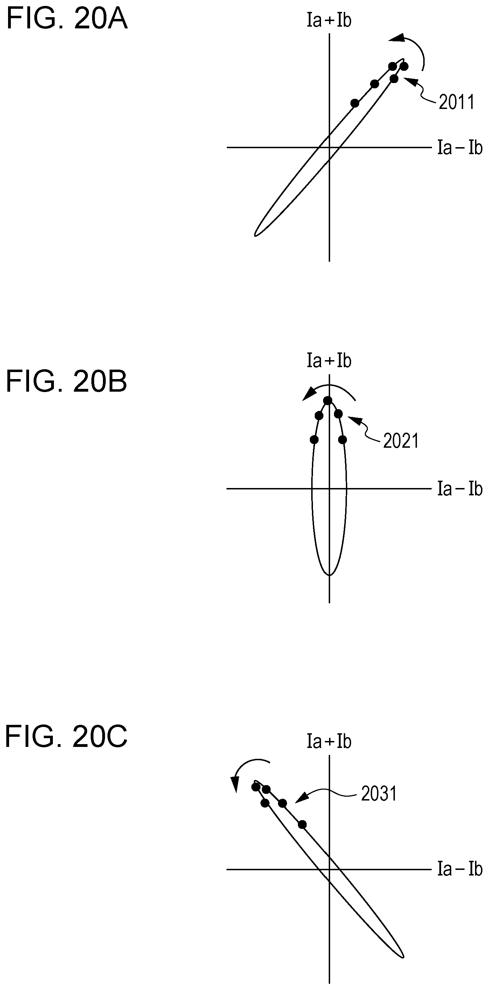

Figs. 20A to 20F are diagrams for explaining a processing example of the sampling means 252 and the arithmetic operation means 253 in a case where a plurality of timings is set by the timing setting means 251 in the driving apparatus 10 for a vibration-type actuator illustrated in Fig. 18. Figs. 20A to 20F illustrate a case where "average processing", according to which an average of a plurality of sign-affixed vibration amounts outputted by the sampling means 252 is outputted, is designated as the arithmetic operation method inputted to the arithmetic operation means 253 from the CPU 210 illustrated in Fig. 18.

Figs. 20A, 20B, and 20C show Lissajous waveforms with the horizontal axis representing the current Ia-Ib and the vertical axis representing the current Ia+Ib. In Figs. 20A, 20B, and 20C, the arrow indicates the direction of Lissajous rotation. Specifically, Fig. 20A shows a state in which the phase difference command is +90°, Fig. 20B shows a state in which the phase difference command is 0°, and Fig. 20C shows a state in which the phase difference command is -90°. In Figs. 20A, 20B, and 20C, five-point filled-circle symbols 2011, 2021, and 2031 denote five timings set by the timing setting means 251 respectively.

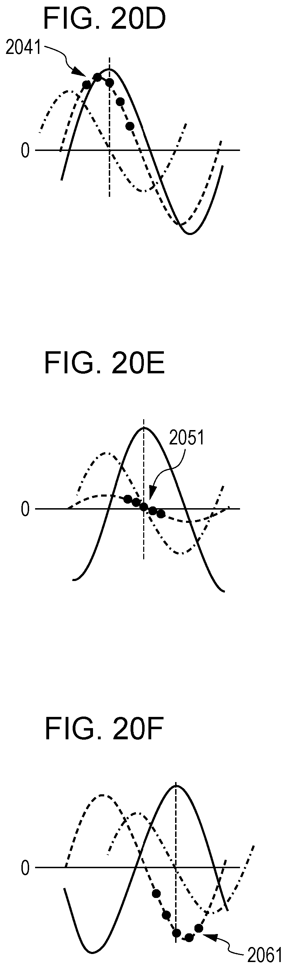

Figs. 20D, 20E, and 20F show the waveforms of the current Ia+Ib (solid curve), the current Ia-Ib (dashed curve), and the differential of the current Ia+Ib (alternate-long-and-short-dash curve). Specifically, Fig. 20D shows a state in which the phase difference command is +90°, Fig. 20E shows a state in which the phase difference command is 0°, and Fig. 20F shows a state in which the phase difference command is -90°. The timing setting means 251 sets, as the timings, either at equal time intervals or at equal phase intervals, five points, two of which are before and two of which are after the center one that is the point in time at which the differential of the current Ia+Ib (alternate-long-and-short-dash curve) illustrated in Figs. 20D to 20F goes across zero from plus to minus. Specifically, the timing setting means 251 sets the timings denoted by the filled-circle symbols 2011 to 2031 in Figs. 20A to 20C. The timings denoted by the filled-circle symbols 2011 to 2031 in Figs. 20A to 20C correspond to the timings denoted by filled-circle symbols 2041 to 2061 in Figs. 20D to 20F respectively. In Figs. 20D to 20F, the sampling means 252 samples the current Ia-Ib (dashed curve) at the above-mentioned timings to acquire the values of the current Ia-Ib denoted by the filled-circle symbols 2011 to 2031 as vibration amounts with plus or minus sign affixed thereto. Then, the arithmetic operation means 253 performs average processing cyclically for each one cycle or longer, which has been determined in advance, on the values obtained by respectively multiplying, by a predetermined coefficient, the five sign-affixed vibration amounts acquired during one cycle of the current Ia+Ib at the sampling means 252. Through this processing, the arithmetic operation means 253 calculates a vibration vector in the direction of movement of the moving body 150.

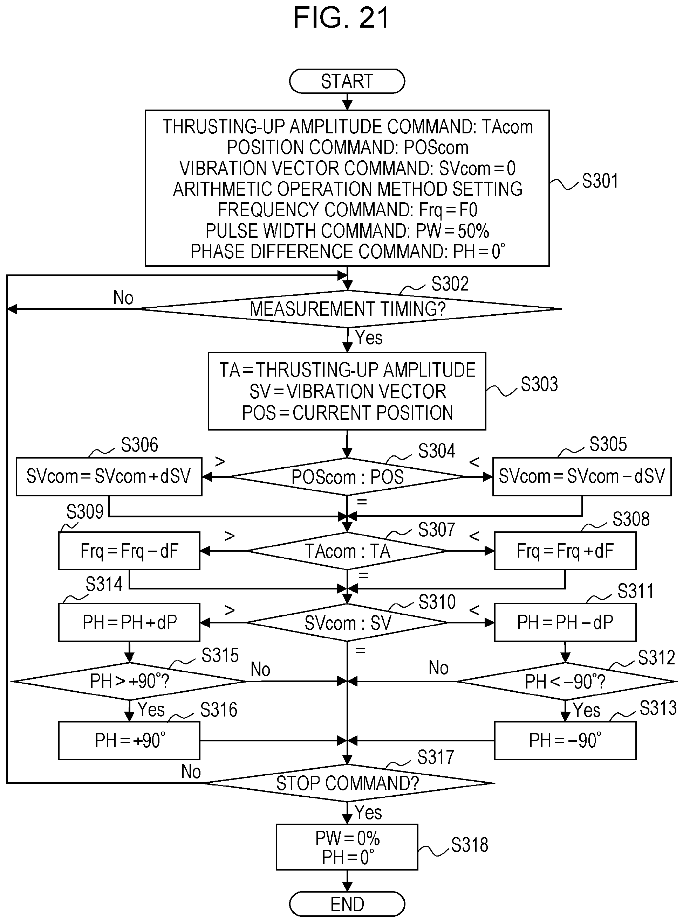

Fig. 21 is a flowchart illustrating an example of processing procedures of a driving method performed by the driving apparatus 10 for a vibration-type actuator illustrated in Fig. 18.

First, in step S301, the CPU 210 sets a thrusting-up amplitude command TAcom having been determined in advance, the arithmetic operation method of the arithmetic operation means 253, and a position command POScom from non-illustrated commanding means. The CPU 210 further sets the vibration vector command SVcom to 0, sets the frequency command Frq to F0, which is the frequency at the time of activation, sets the pulse width command PW to 50%, and sets the phase difference command PH to 0° as initial settings.

Next, in step S302, the CPU 210 determines whether the measurement timing has come or not. If it is determined that the measurement timing has not come yet (S302/No), the process waits at step S302.

On the other hand, if the determination result in step S302 is that the measurement timing has come (S302/Yes), the process proceeds to step S303.

Upon proceeding to step S303, the CPU 210 acquires the thrusting-up amplitude TA outputted from the amplitude detection means 254, the vibration vector SV outputted from the arithmetic operation means 253, and a current position POS.

Next, in step S304, the CPU 210 compares the position command POScom set in step S301 and the current position POS acquired in step S303.

If the comparison result in step S304 is that the position command POScom is less (<) than the current position POS, the process proceeds to step S305.

Upon proceeding to step S305, the CPU 210 subtracts a predetermined vibration vector dSV from the vibration vector command SVcom.

If the comparison result in step S304 is that the position command POScom is greater (>) than the current position POS, the process proceeds to step S306.

Upon proceeding to step S306, the CPU 210 adds a predetermined vibration vector dSV to the vibration vector command SVcom.

The process proceeds to step S307 when the processing in step S305 ends, when the processing in step S306 ends, or if the comparison in step S304 indicates that the position command POScom is equal (=) to the current position POS. In the subsequent steps, the thrusting-up amplitude TA and the vibration vector SV are compared with the thrusting-up amplitude command TAcom and the vibration vector command SVcom to perform control of the frequency command Frq and the phase difference command PH.

First, the control of the frequency command Frq will now be described in step S307 to step S309.

In step S307, the CPU 210 compares the thrusting-up amplitude command TAcom set in step S301 and the thrusting-up amplitude TA acquired in step S303.

If the comparison result in step S307 is that the thrusting-up amplitude command TAcom is less (<) than the thrusting-up amplitude TA, the process proceeds to step S308.

Upon proceeding to step S308, the CPU 210 adds a predetermined frequency dF to the frequency command Frq so as to shift the frequency away from the resonant frequency of the vibrating body 140, thereby decreasing the thrusting-up amplitude TA.

If the comparison result in step S307 is that the thrusting-up amplitude command TAcom is greater (>) than the thrusting-up amplitude TA, the process proceeds to step S309.

Upon proceeding to step S309, the CPU 210 subtracts a predetermined frequency dF from the frequency command Frq so as to shift the frequency closer to the resonant frequency of the vibrating body 140, thereby increasing the thrusting-up amplitude TA.

The process proceeds to step S310 when the processing in step S308 ends, when the processing in step S309 ends, or if the comparison in step S307 indicates that the thrusting-up amplitude command TAcom is equal (=) to the thrusting-up amplitude TA. Through repetition of the operations in step S307 to step S309, the frequency command Frq is controlled such that the thrusting-up amplitude TA approaches the thrusting-up amplitude command TAcom.

Next, the control of the phase difference command PH will now be described in step S310 to step S316.

In step S310, the CPU 210 compares the vibration vector command SVcom set in step S304 to step S306 and the vibration vector SV acquired in step S303.

If the comparison result in step S310 is that the vibration vector command SVcom is less (<) than the vibration vector SV, the process proceeds to step S311.

Upon proceeding to step S311, the CPU 210 subtracts a predetermined phase dP from the phase difference command PH.

Next, in step S312, the CPU 210 determines whether the phase difference command PH is less than -90° or not.

If the determination result in step S312 is that the phase difference command PH is less than -90° (S312/Yes), the process proceeds to step S313.

Upon proceeding to step S313, the CPU 210 sets the phase difference command PH to -90°.

If the comparison result in step S310 is that the vibration vector command SVcom is greater (>) than the vibration vector SV, the process proceeds to step S314.

Upon proceeding to step S314, the CPU 210 adds a predetermined phase dP to the phase difference command PH.

Next, in step S315, the CPU 210 determines whether the phase difference command PH is greater than +90° or not.

If the determination result in step S315 is that the phase difference command PH is greater than +90° (S315/Yes), the process proceeds to step S316.

Upon proceeding to step S316, the CPU 210 sets the phase difference command PH to +90°.

The process proceeds to step S317 when the processing in step S313 ends, when the processing in step S316 ends, or if the comparison in step S310 indicates that the vibration vector command SVcom is equal (=) to the vibration vector SV. Through repetition of the operations in step S310 to step S316, the phase difference command PH is controlled such that the vibration vector SV approaches the vibration vector command SVcom. The CPU 210 performing the operations in step S310 to step S316 constitutes first control means configured to control the phase difference between the two-phase alternating-current signals PA and PB such that the vibration vector SV follows the vibration vector command SVcom (first vibration target value). The sign of the vibration vector SV and the phase difference command PH corresponds to the direction of thrust for the moving body 150 (slider), and the position is controlled by controlling the phase difference command PH according to a deviation between the current position POS and the position command POScom.

Next, in step S317, the CPU 210 determines whether a stop command has been inputted or not. If it is determined that the stop command has not been inputted (S317/No), the process returns to step S302, and the processing in step S302 and the subsequent steps is performed.

On the other hand, if the determination result in step S317 is that the stop command has been inputted (S317/Yes), the process proceeds to step S318.

Upon proceeding to step S318, the CPU 210 sets the pulse width command PW to 0% and sets the phase difference command PH to 0°. This brings the voltage applied to the piezoelectric bodies 1411 to 1412 in the piezoelectric element 141 of the vibration-type actuator 100 to 0 V, and the moving body 150 (slider) of the vibration-type actuator 100 thus stops.

Then, upon completion of the processing in step S318, the processing in the flowchart illustrated in Fig. 21 ends.

In the present embodiment, a minor loop of controlling the vibration vector SV by means of a phase difference is used, and this makes it possible to control the vibrations of the vibrating body 140 at a high speed and stably without being influenced by a mechanism that includes the position sensor 300. In addition, it is possible to make the immediate responsiveness of position control higher than achieved by controlling the phase difference according to the position deviation directly.

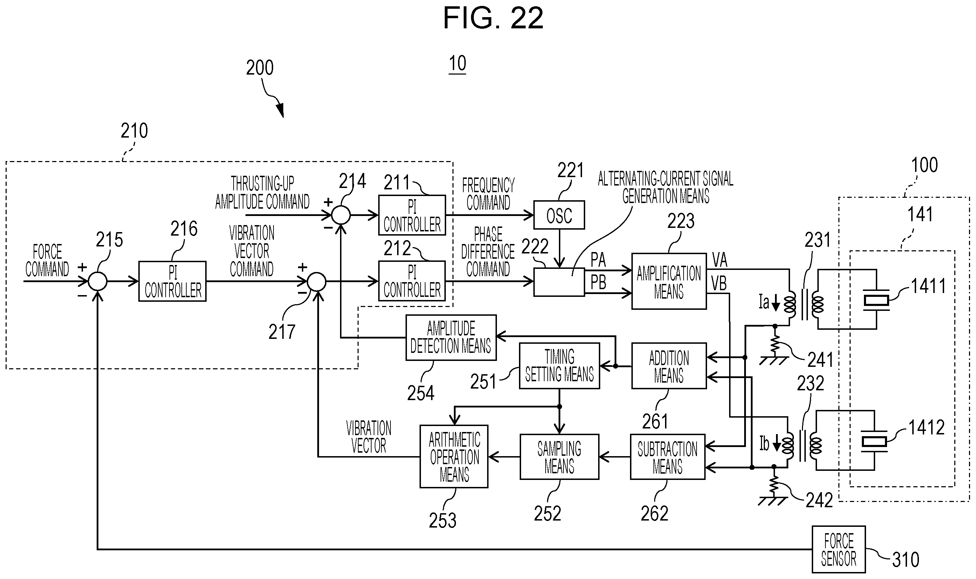

Fig. 22 is a diagram illustrating a second configuration example of a driving apparatus 10 for a vibration-type actuator according to the second embodiment of the present invention. In Fig. 22, the same reference characters are assigned to the components that are the same as those illustrated in Figs. 3, 10, 15, 16, and 18, and a detailed explanation of them is omitted.

The driving apparatus 10 for a vibration-type actuator illustrated in Fig. 22 includes the vibration-type actuator 100, the control device 200, and a force sensor 310. That is, the driving apparatus 10 for a vibration-type actuator illustrated in Fig. 22 has a configuration for performing force control using the force sensor 310 in place of position control using the position sensor 300, as compared with the driving apparatus 10 for a vibration-type actuator illustrated in Fig. 18.

In the driving apparatus 10 for a vibration-type actuator illustrated in Fig. 22, the CPU 210 includes the PI controller 211, the PI controller 212, the comparison means 214, the comparison means 215, the PI controller 216, and the comparison means 217. In Fig. 22, the setting operations for the frequency command Frq, the phase difference command PH, and the vibration vector command SVcom in the flowchart illustrated in Fig. 21 are performed by the PI controller 211, the PI controller 212, and the PI controller 216 respectively. Specifically, the PI controller 216 illustrated in Fig. 22 determines the vibration vector command (first vibration target value) such that the force received by the moving body 150 and detected by the force sensor 310 (the force received by a member connected directly or indirectly to the moving body 150) follows the desired force (predetermined force). The PI controller 211 illustrated in Fig. 22 constitutes second control means configured to perform frequency control of the two-phase alternating-current signals such that the thrusting-up amplitude based on the output signal of the addition means 261, which is detected by the amplitude detection means 254, follows the thrusting-up amplitude command (second vibration target value).

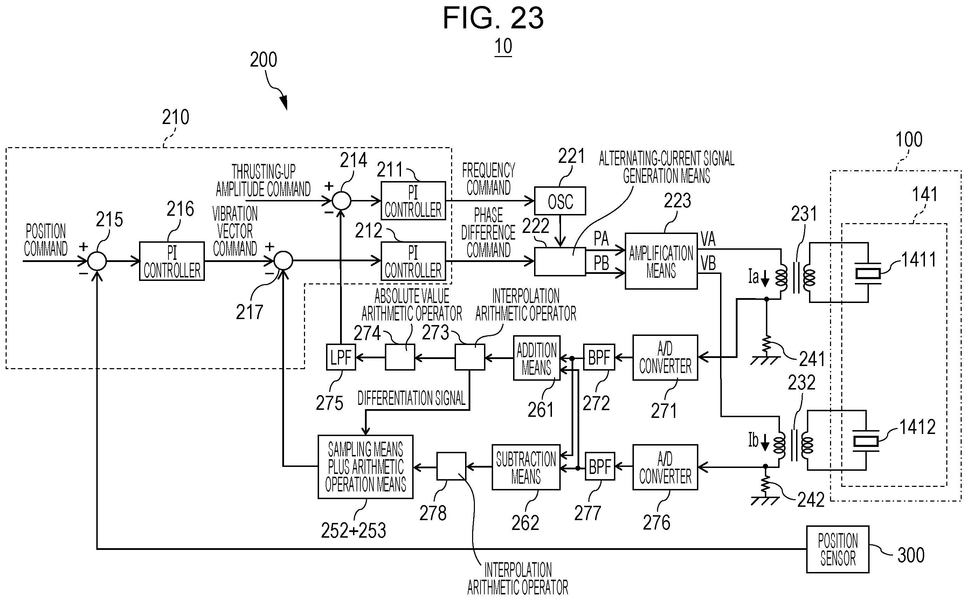

Fig. 23 is a diagram illustrating a third configuration example of a driving apparatus 10 for a vibration-type actuator according to the second embodiment of the present invention. In Fig. 23, the same reference characters are assigned to the components that are the same as those illustrated in Figs. 3, 10, 15, 16, 18, and 22, and a detailed explanation of them is omitted.

The driving apparatus 10 for a vibration-type actuator illustrated in Fig. 23 includes the vibration-type actuator 100, the control device 200, and the position sensor 300.

The control device 200 illustrated in Fig. 23 includes the CPU 210, the oscillator 221, the alternating-current signal generation means 222, the amplification means 223, the transformers 231 and 232, the resistors 241 and 242, the addition means 261, and the subtraction means 262. The control device 200 illustrated in Fig. 23 further includes A/D converters 271 and 276, BPFs 272 and 277, interpolation arithmetic operators 273 and 278, an absolute value arithmetic operator 274, an LPF 275, and sampling means plus arithmetic operation means 252+253. The BPFs 272 and 277 are bandpass filters. The LPF 275 is a low-pass filter.

In the driving apparatus 10 for a vibration-type actuator illustrated in Fig. 23, the CPU 210 includes the PI controller 211, the PI controller 212, the comparison means 214, the comparison means 215, the PI controller 216, and the comparison means 217. Specifically, in Fig. 23, the setting operations for the frequency command Frq, the phase difference command PH, and the vibration vector command SVcom in the flowchart illustrated in Fig. 21 are performed by the PI controller 211, the PI controller 212, and the PI controller 216 respectively.

In the driving apparatus 10 for a vibration-type actuator illustrated in Figs. 18 and 22, etc., the addition of the current Ia and the current Ib by the addition means 261 and the subtraction thereof by the subtraction means 262 are performed in an analog signal state. By contrast, in the driving apparatus 10 for a vibration-type actuator illustrated in Fig. 23, the addition by the addition means 261 and the subtraction by the subtraction means 262 are performed after converting the current Ia and the current Ib into digital signals by the A/D converter 271 and the A/D converter 276.

The A/D converter 271 is a constituent unit that converts the current Ia that is an analog signal into a digital signal. The A/D converter 276 is a constituent unit that converts the current Ib that is an analog signal into a digital signal. The current Ia, Ib at this time includes a harmonic distortion and a direct current component. To detect a fundamental wave component of the current Ia, Ib, the BPF 272 generates a signal while cutting a direct current component and a harmonic component of the current Ia, and the BPF 277 generates a signal while cutting a direct current component and a harmonic component of the current Ib. A low-pass filter whose cutoff frequency is equal to or lower than a half of the sampling frequency of A/D conversion is inserted in the input of the A/D converter 271, 276.

The addition means 261 illustrated in Fig. 23 adds the waveform of the current Ia and the waveform of the current Ib each having been converted into a time-series digital data string, thereby outputting time-series data of the current Ia+Ib. The subtraction means 262 illustrated in Fig. 23 subtracts the current Ib from the current Ia each having been converted into the time-series digital data string, thereby outputting time-series data of the current Ia-Ib.

The interpolation arithmetic operator 273 is a constituent unit that performs up-sampling on the time-series data of the current Ia+Ib outputted by the addition means 261, and outputs a time-series interpolation signal. The interpolation arithmetic operator 273 includes two tiers of differentiation means and two tiers of integration means, and outputs, besides the interpolation signal, a differentiation signal shifted in phase from the interpolation signal by 90°. The differentiation signal is outputted to the sampling means plus arithmetic operation means 252+253. The interpolation arithmetic operator 273 configured to output the differentiation signal to the sampling means plus arithmetic operation means 252+253 in the driving apparatus 10 for a vibration-type actuator illustrated in Fig. 23 corresponds to the timing setting means 251 illustrated in Fig. 22, etc.

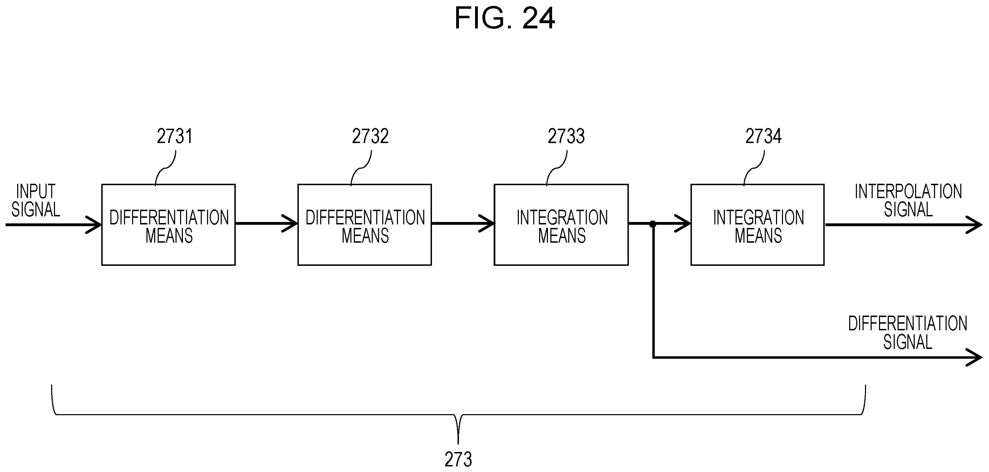

Fig. 24 is a diagram illustrating an example of the internal configuration of the interpolation arithmetic operator 273 illustrated in Fig. 23.

The interpolation arithmetic operator 273 includes two differentiation means 2731 and 2732 connected in series and configured to operate in synchronization with the output of the A/D converter 271 and two integration means 2733 and 2734 configured to operate at a sampling rate that is 2 to the power of N thereof (N being a positive integer). In the interpolation arithmetic operator 273 illustrated in Fig. 24, the output of the first-tier integration means 2733 is outputted as the differentiation signal.

Now, reference is made back to Fig. 23.

The absolute value arithmetic operator 274 is a constituent unit that calculates and outputs an absolute value of the current Ia+Ib outputted by the interpolation arithmetic operator 273.

The LPF 275 is a constituent unit that acquires the amplitude of the current Ia+Ib by smoothing the absolute value of the current Ia+Ib outputted by the absolute value arithmetic operator 274. The amplitude of the current Ia+Ib acquired at the LPF 275 is compared by the comparison means 214 with the thrusting-up amplitude command from non-illustrated commanding means, and is controlled in such a way as to follow the thrusting-up amplitude command.

The interpolation arithmetic operator 278 is a constituent unit that performs up-sampling on the time-series data of the current Ia-Ib outputted by the subtraction means 262, and outputs a time-series interpolation signal.

The sampling means plus arithmetic operation means 252+253 performs sampling of the interpolated time-series data of the current Ia-Ib at the timing at which the differentiation signal of the current Ia+Ib inputted from the interpolation arithmetic operator 273 goes across zero from plus to minus, and calculates and outputs the vibration vector described above. The vibration vector calculated at the sampling means plus arithmetic operation means 252+253 is compared by the comparison means 217 with the vibration vector command outputted by the PI controller 216, and the phase difference between the alternating-current signals VA and VB is controlled in such a way as to follow the vibration vector command.

In the driving apparatus 10 for a vibration-type actuator according to the second embodiment, the alternating-current signal generation means 222 generates the two-phase alternating-current signals PA and PB, and the amplification means 223 amplifies these two-phase alternating-current signals to output two-phase drive voltages that are to be applied to the vibrating body 140. The driving apparatus 10 for a vibration-type actuator according to the second embodiment includes the resistor 241 and the resistor 242 as the first vibration detection means and the second vibration detection means that detect vibrations of the vibrating body 140 independently of each other. Then, in the driving apparatus 10 for a vibration-type actuator according to the second embodiment, the timing setting means 251 (including the interpolation arithmetic operator 273) sets the timing of detection by the second vibration detection means by using the output signal of the addition means 261. Next, in the driving apparatus 10 for a vibration-type actuator according to the second embodiment, the sampling means 252 performs sampling on the output signal of the subtraction means 262 at the timing set by the timing setting means 251 described above, thereby acquiring a sign-affixed vibration amount. Then, in the driving apparatus 10 for a vibration-type actuator according to the second embodiment, based on the sign-affixed vibration amount acquired by the sampling means 252, the arithmetic operation means 253 calculates a vibration vector in the direction of movement of the moving body 150.

With the above-described configuration, in the vibration-type actuator 100 that includes the vibrating body 140 and the moving body 150, it is possible to detect a vibration state of the vibrating body 140 properly also in a region where the direction of movement of the moving body 150 is inverted. This improves, for example, precision in estimating the speed of the moving body 150 in a speed region including the inversion of the direction of movement of the moving body 150.

In the second embodiment, vibrations in two vibration modes of the vibrating body 140 are detected, and vibrations in the thrusting-up direction and vibrations in the feed direction are detected through addition and subtraction; however, this does not imply any limitation. As the vibration detection means for detecting the vibrations of the vibrating body 140, for example, optical sensors or the like may be used to detect the vibrations in the thrusting-up direction and the vibrations in the feed direction directly, and the vibration vector may be calculated without performing addition and subtraction.

In the driving apparatus 10 for a vibration-type actuator according to the second embodiment, for example, the speed estimation means 213 illustrated in Fig. 15 may be provided as an internal component of the CPU 210. In this case, a configuration of estimating the speed of the moving body 150 on the basis of the amplitude of the output signal of the addition means 261 detected by the amplitude detection means 254 and on the basis of the vibration vector calculated by the arithmetic operation means 253 is adopted for the speed estimation means 213 according to the second embodiment. When this configuration is adopted, it is possible to add, as an internal component of the CPU 210, a component that determines the vibration vector command (first vibration target value) such that the moving speed of the moving body 150 the moving speed of (a member connected directly or indirectly to the moving body 150) follows the desired speed (predetermined speed).

### (Third Embodiment)

Next, a third embodiment will now be described. In the third embodiment described below, description of matters that are the same as those having been described in the first and second embodiments above will be omitted, and the focus of description will be on matters that are different from those having been described in the first and second embodiments above.

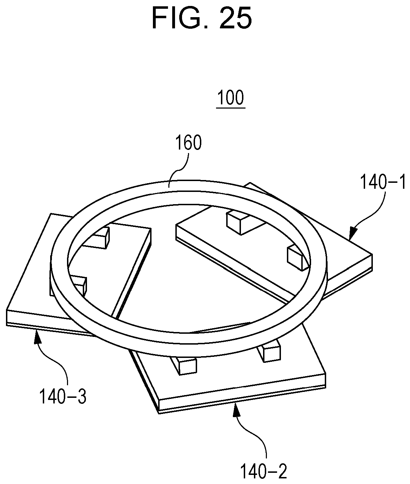

Fig. 25 is a diagram illustrating an example of a schematic configuration of a vibration-type actuator 100 according to a third embodiment of the present invention. In Fig. 25, the same reference characters are assigned to the components that are the same as those illustrated in Figs. 17A to 17E, and a detailed explanation of them is omitted.

As illustrated in Fig. 25, the vibration-type actuator 100 according to the third embodiment includes three vibrating bodies 140-1 to 140-3 and a moving body 160. The vibrating bodies 140-1 to 140-3 each have the same configuration as that of the vibrating body 140 having been described with reference to Fig. 17A and Fig. 17B. In the vibration-type actuator 100 according to the third embodiment, as illustrated in Fig. 25, the vibrating bodies 140-1 to 140-3 are arranged annularly.

The moving body 160 is a rotor that is in press contact with the vibrating bodies 140-1 to 140-3 and rotates due to vibrations of the vibrating bodies 140-1 to 140-3. The moving body 160 (rotor) is pressed by non-illustrated pressing means for contact with the protrusions 142 provided in the vibrating bodies 140-1 to 140-3. In the vibration-type actuator 100 illustrated in Fig. 25, since the three vibrating bodies 140-1 to 140-3 are used, it is possible to output a larger torque than in a case where a single vibrating body 140 is used.

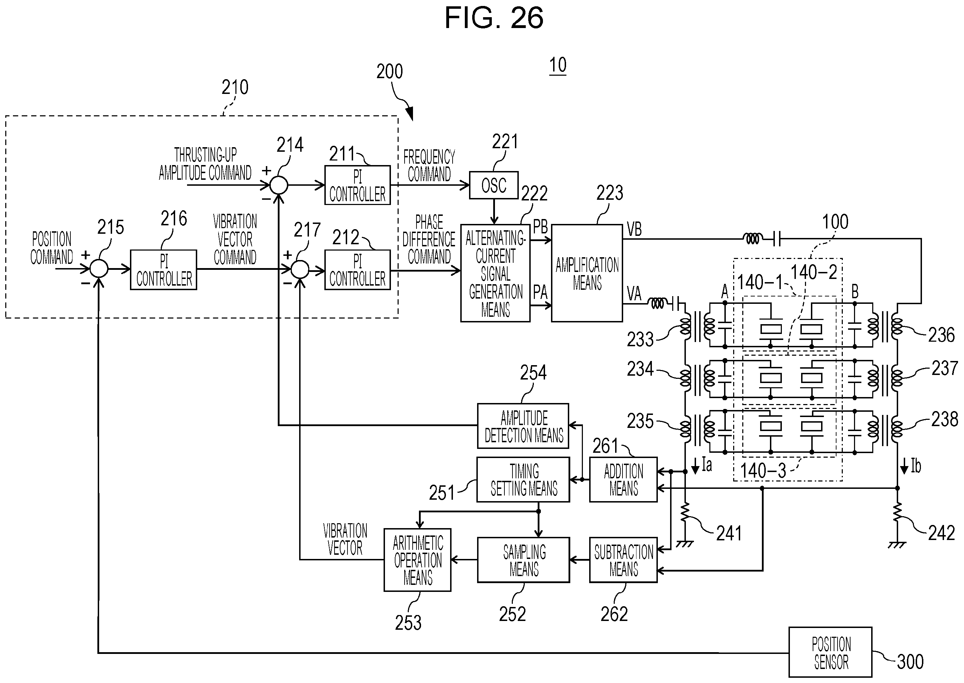

Fig. 26 is a diagram illustrating a first configuration example of the driving apparatus 10 for a vibration-type actuator according to the third embodiment of the present invention. In Fig. 26, the same reference characters are assigned to the components that are the same as those illustrated in Figs. 3, 10, 15, 16, 18, 22, and 23, and a detailed explanation of them is omitted.

The driving apparatus 10 for a vibration-type actuator illustrated in Fig. 26 includes the vibration-type actuator 100, the control device 200, and the position sensor 300. Specifically, only the three vibrating bodies 140-1 to 140-3 illustrated in Fig. 25 are illustrated inside the vibration-type actuator 100 in Fig. 26. More particularly, in the driving apparatus 10 for a vibration-type actuator illustrated in Fig. 26, an example of a case where the vibrating bodies 140-1 to 140-3 are connected in series is shown. In addition, in the driving apparatus 10 for a vibration-type actuator illustrated in Fig. 26, an example of insertion of a minor loop for a vibration vector in position feedback control is shown.

The control device 200 illustrated in Fig. 26 includes the CPU 210, the oscillator 221, the alternating-current signal generation means 222, the amplification means 223, the timing setting means 251, the sampling means 252, the arithmetic operation means 253, and the amplitude detection means 254. The control device 200 illustrated in Fig. 26 further includes transformers 233 to 238, the resistors 241 and 242, the addition means 261, and the subtraction means 262.

In the driving apparatus 10 for a vibration-type actuator illustrated in Fig. 26, the CPU 210 includes the PI controller 211, the PI controller 212, the comparison means 214, the comparison means 215, the PI controller 216, and the comparison means 217. The internal components (211, 212, and 214 to 217) of the CPU 210 illustrated in Fig. 26 have the same functions as those of the internal components (211, 212, and 214 to 217) of the CPU 210 illustrated in Fig. 23.

Each of the transformers 233 to 235 is provided for the corresponding one of the vibrating bodies 140-1 to 140-3. To the secondary side of each of the transformers 233 to 235, the A-phase-side one of the two vibration-awaking piezoelectric bodies (the piezoelectric body 1411 and the piezoelectric body 1412 illustrated in Fig. 17B) included in each of the three vibrating bodies 140-1 to 140-3 is connected. Winding lines at the primary side of the transformers 233 to 235 are connected in series, to one end of which the alternating-current signal VA is applied, and the other end of which is connected to the resistor 241 for detecting the current Ia.

Each of the transformers 236 to 238 is provided for the corresponding one of the vibrating bodies 140-1 to 140-3. To the secondary side of each of the transformers 236 to 238, the B-phase-side one of the two vibration-awaking piezoelectric bodies (the piezoelectric body 1411 and the piezoelectric body 1412 illustrated in Fig. 17B) included in each of the three vibrating bodies 140-1 to 140-3 is connected. Winding lines at the primary side of the transformers 236 to 238 are connected in series, to one end of which the alternating-current signal VB is applied, and the other end of which is connected to the resistor 242 for detecting the current Ib.

The resistor 241 detects the current Ia flowing through the primary side of the transformers 233 to 235. The resistor 242 detects the current Ib flowing through the primary side of the transformers 236 to 238.

The capacitors connected in parallel at the secondary side of the respective transformers 233 to 238 are capacitors for frequency matching adjustment.

In Fig. 26, the plurality of vibrating bodies 140-1 to 140-3 is regarded as a single vibrating body 140 by adjusting the individual characteristics of the vibrating bodies 140-1 to 140-3, and a vibration vector is calculated by using an addition signal and a subtraction signal of the current Ia and the current Ib to perform control. With the above-described configuration, by the insertion a minor loop for a vibration vector, it is possible to improve the stability and immediate responsiveness of position control using the position sensor 300.

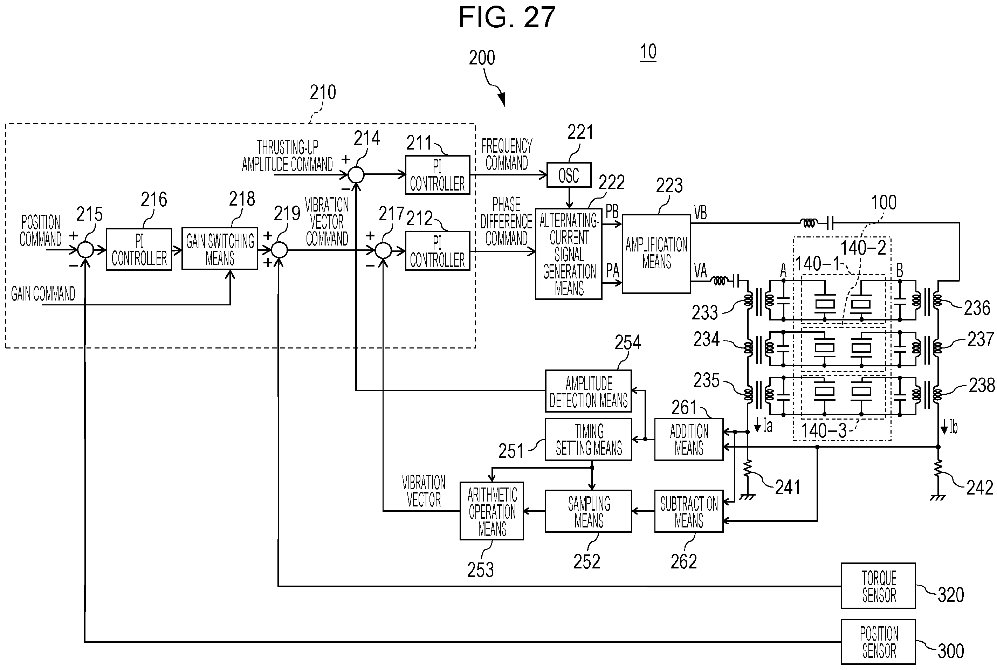

Fig. 27 is a diagram illustrating a second configuration example of the driving apparatus 10 for a vibration-type actuator according to the third embodiment of the present invention. In Fig. 27, the same reference characters are assigned to the components that are the same as those illustrated in Figs. 3, 10, 15, 16, 18, 22, 23, and 26, and a detailed explanation of them is omitted.

The driving apparatus 10 for a vibration-type actuator illustrated in Fig. 27 includes the vibration-type actuator 100, the control device 200, the position sensor 300, and a torque sensor 320. Specifically, in the driving apparatus 10 for a vibration-type actuator illustrated in Fig. 27, a loop of torque control using the torque sensor 320 is inserted in the configuration of the driving apparatus 10 for a vibration-type actuator illustrated in Fig. 26. In addition, the driving apparatus 10 for a vibration-type actuator illustrated in Fig. 27 is configured to allow the moving body 160 (rotor) to be rotated manually when a position control gain is zero.

The torque sensor 320 is a sensor that detects a torque applied to the moving body 160 (rotor).

In the driving apparatus 10 for a vibration-type actuator illustrated in Fig. 27, the CPU 210 includes the PI controller 211, the PI controller 212, the comparison means 214, the comparison means 215, the PI controller 216, the comparison means 217, gain switching means 218, and addition means 219. The gain switching means 218 is a constituent unit that switches the gain of position control according to a gain command from non-illustrated commanding means.

The setting of a gain by the gain switching means 218, and operation according to it, will be described below. The gain switching means 218 sets the gain within a range of zero and greater. In a case where the gain set by the gain switching means 218 is zero, it is possible to make the moving body 160 (rotor) manually rotatable by controlling the vibration vector such that the torque applied to the moving body 160 (rotor) is zero. In a case where the gain set by the gain switching means 218 is greater than zero, position control is performed in accordance with a position command. The moving body 160 (rotor) can be rotated by hand with a small force if a small gain is set by the gain switching means 218. A large force is required if a large gain is set by the gain switching means 218. In both cases, the moving body 160 (rotor) rotates to the position that is in accordance with the position command from the non-illustrated commanding means when the hand is released from the moving body 160 (rotor).

In the driving apparatus 10 for a vibration-type actuator according to the third embodiment, the alternating-current signal generation means 222 generates the two-phase alternating-current signals PA and PB, and the amplification means 223 amplifies these two-phase alternating-current signals to output two-phase drive voltages that are to be applied to the vibrating body 140. The driving apparatus 10 for a vibration-type actuator according to the third embodiment includes the resistor 241 and the resistor 242 as the first vibration detection means and the second vibration detection means that detect vibrations of the vibrating body 140 independently of each other. Then, in the driving apparatus 10 for a vibration-type actuator according to the third embodiment, the timing setting means 251 sets the timing of detection by the second vibration detection means by using the output signal of the addition means 261. Next, in the driving apparatus 10 for a vibration-type actuator according to the third embodiment, the sampling means 252 performs sampling on the output signal of the subtraction means 262 at the timing set by the timing setting means 251 described above, thereby acquiring a sign-affixed vibration amount. Then, in the driving apparatus 10 for a vibration-type actuator according to the third embodiment, based on the sign-affixed vibration amount acquired by the sampling means 252, the arithmetic operation means 253 calculates a vibration vector in the direction of movement of the moving body 160.

With the above-described configuration, in the vibration-type actuator 100 that includes the vibrating body 140 and the moving body 160, it is possible to detect a vibration state of the vibrating body 140 properly also in a region where the direction of movement of the moving body 160 is inverted. This improves, for example, precision in estimating the speed of the moving body 160 in a speed region including the inversion of the direction of movement of the moving body 160.

### (Other Embodiments)

The present invention can be embodied also by supplying, to a system or an apparatus via a network or a storage medium, a program that realizes one or more functions of the embodiments described above, and by causing one or more processors in the computer of the system or the apparatus to read out and run the program. The present invention be embodied also by means of circuitry (for example, ASIC) that realizes one or more functions.

The program, and a computer-readable storage medium storing the program, are encompassed within the present invention.

All of the embodiments of the present invention described above show just some examples in specific implementation of the present invention. The technical scope of the present invention shall not be construed restrictively by these examples. That is, the present invention can be embodied in various modes without departing from its technical spirit or from its major features.

The disclosure of the embodiments of the present invention includes the following configurations and methods.

### [Configuration 1]

A driving apparatus for a vibration-type actuator including a vibrating body and a moving body that is in press contact with the vibrating body, the driving apparatus comprising:
generation means for generating alternating-current signals of two or more phases to be applied to the vibrating body;
first vibration detection means and second vibration detection means for detecting vibrations of the vibrating body independently of each other;
setting means for setting a timing of the detection by the second vibration detection means on a basis of a first output signal that is an output signal of the first vibration detection means;
sampling means for acquiring a sign-affixed vibration amount by sampling either a second output signal that is an output signal of the second vibration detection means or an output signal obtained through subtraction of the first output signal and the second output signal at the timing set by the setting means; and
arithmetic operation means for calculating a vibration vector in a direction of movement of the moving body on a basis of the sign-affixed vibration amount.

### [Configuration 2]

The driving apparatus for the vibration-type actuator according to configuration **1,** further comprising:
addition means for adding the first output signal and the second output signal; and
subtraction means for subtracting the first output signal and the second output signal, wherein
the setting means sets the timing by using an output signal of the addition means, and the sampling means acquires the sign-affixed vibration amount by sampling an output signal of the subtraction means.

### [Configuration 3]

The driving apparatus for the vibration-type actuator according to configuration 1 or 2, wherein
the first vibration detection means and the second vibration detection means are piezoelectric bodies included in the vibrating body.

### [Configuration 4]

The driving apparatus for the vibration-type actuator according to configuration 1 or 2, wherein
the first vibration detection means and the second vibration detection means are electronic parts for measuring mechanical arm currents flowing due to applying the alternating-current signals to the vibrating body.

### [Configuration 5]

The driving apparatus for the vibration-type actuator according to any of configurations 1 to 4, wherein
the arithmetic operation means calculates the vibration vector by finding a sum after multiplying, by a coefficient having been determined in advance, a plurality of sign-affixed vibration amounts, each as the sign-affixed vibration amount, obtained as a result of the sampling at a plurality of timings, each as the timing, by the sampling means.

### [Configuration 6]

The driving apparatus for the vibration-type actuator according to any of configurations 1 to 5, wherein
the arithmetic operation means calculates the vibration vector by averaging a plurality of sign-affixed vibration amounts obtained each as the sign-affixed vibration amount as a result of the sampling at a plurality of timings each as the timing by the sampling means for each cycle of the detection by the first vibration detection means.

### [Configuration 7]

The driving apparatus for the vibration-type actuator according to any of configurations 1 to 6, further comprising:
amplitude detection means for detecting an amplitude of the first output signal; and
speed estimation means for estimating a speed of the moving body on a basis of the amplitude detected by the amplitude detection means and the vibration vector.

### [Configuration 8]

The driving apparatus for the vibration-type actuator according to configuration 2, further comprising:
amplitude detection means for detecting an amplitude of the output signal of the addition means; and
speed estimation means for estimating a speed of the moving body on a basis of the amplitude detected by the amplitude detection means and the vibration vector.

### [Configuration 9]

The driving apparatus for the vibration-type actuator according to configuration 7 or 8, wherein
the speed estimation means estimates the speed of the moving body by multiplying the vibration vector by a gain set according to the amplitude detected by the amplitude detection means.

### [Configuration 10]

The driving apparatus for the vibration-type actuator according to any of configurations 1 to 9, further comprising:
first control means for controlling at least one of a phase difference and amplitudes of the alternating-current signals of the two or more phases generated by the generation means such that the vibration vector follows a first vibration target value.

### [Configuration 11]

The driving apparatus for the vibration-type actuator according to configuration 10, wherein
the first control means determines the first vibration target value such that a position of a member connected directly or indirectly to the moving body follows a predetermined position.

### [Configuration 12]

The driving apparatus for the vibration-type actuator according to configuration 10, wherein
the first control means determines the first vibration target value such that a moving speed of a member connected directly or indirectly to the moving body follows a predetermined speed.

### [Configuration 13]

The driving apparatus for the vibration-type actuator according to configuration 10, wherein
the first control means determines the first vibration target value such that a force received by a member connected directly or indirectly to the moving body follows a predetermined force.

### [Configuration 14]

The driving apparatus for the vibration-type actuator according to any of configurations 1 to 13, further comprising:
amplitude detection means for detecting an amplitude of the first output signal; and
second control means for controlling frequencies of the alternating-current signals of the two or more phases generated by the generation means such that the amplitude detected by the amplitude detection means follows a second vibration target value.

### [Configuration 15]

The driving apparatus for the vibration-type actuator according to configuration 2, further comprising:
amplitude detection means for detecting an amplitude of the output signal of the addition means; and
second control means for controlling frequencies of the alternating-current signals of the two or more phases generated by the generation means such that the amplitude detected by the amplitude detection means follows a second vibration target value.

### [Configuration 16]

The driving apparatus for the vibration-type actuator according to any of configurations 1 to 15, further comprising:
amplification means for amplifying the alternating-current signals of the two or more phases to output drive voltages of two or more phases to be applied to the vibrating body.

### [Method 1]

A driving method for a vibration-type actuator including a vibrating body and a moving body that is in press contact with the vibrating body, the driving method comprising:
a generation step of generating alternating-current signals of two or more phases to be applied to the vibrating body;
a detection step of, by using first vibration detection means and second vibration detection means, detecting vibrations of the vibrating body independently of each other;
a setting step of setting a timing of the detection by the second vibration detection means on a basis of a first output signal that is an output signal of the first vibration detection means;
a sampling step of acquiring a sign-affixed vibration amount by sampling either a second output signal that is an output signal of the second vibration detection means or an output signal obtained through subtraction of the first output signal and the second output signal at the timing set in the setting step; and
an arithmetic operation step of calculating a vibration vector in a direction of movement of the moving body on a basis of the sign-affixed vibration amount.

### [Method 2]

The driving method for the vibration-type actuator according to method 1, further comprising:
an amplification step of amplifying the alternating-current signals of the two or more phases to output drive voltages of two or more phases to be applied to the vibrating body.

The present invention is not limited to the embodiments having been described above, and various alterations and modifications can be made without departing from the spirit and scope of the present invention. The following claims are appended hereto so as to make the claimed scope of the present invention public.

This application claims the benefit of priority based on Japanese Patent Application No. 2022-162336 filed on October 7, 2022, which is hereby incorporated by reference in its entirety.

### Reference Signs List

- 100: vibration-type actuator
- 110: vibrating body
- 111: elastic body
- 112: piezoelectric element
- 1121 to 1126: piezoelectric body
- 113: friction member
- 120: moving body
- 130: rotation shaft
- 200: control device
- 210: CPU
- 221: oscillator
- 222: alternating-current signal generation means
- 223: amplification means
- 231 to 232: transformer
- 241 to 242: resistor
- 251: timing setting means
- 252: sampling means
- 253: arithmetic operation means
- 254: amplitude detection means

## Claims

1. A driving apparatus for a vibration-type actuator including a vibrating body and a moving body that is in press contact with the vibrating body, the driving apparatus comprising:
generation means for generating alternating-current signals of two or more phases to be applied to the vibrating body;
first vibration detection means and second vibration detection means for detecting vibrations of the vibrating body independently of each other;
setting means for setting a timing of the detection by the second vibration detection means on a basis of a first output signal that is an output signal of the first vibration detection means;
sampling means for acquiring a sign-affixed vibration amount by sampling either a second output signal that is an output signal of the second vibration detection means or an output signal obtained through subtraction of the first output signal and the second output signal at the timing set by the setting means; and
arithmetic operation means for calculating a vibration vector in a direction of movement of the moving body on a basis of the sign-affixed vibration amount.

2. The driving apparatus for the vibration-type actuator according to claim **1,** further comprising:
addition means for adding the first output signal and the second output signal; and
subtraction means for subtracting the first output signal and the second output signal, wherein
the setting means sets the timing by using an output signal of the addition means, and
the sampling means acquires the sign-affixed vibration amount by sampling an output signal of the subtraction means.

3. The driving apparatus for the vibration-type actuator according to claim 1, wherein
the first vibration detection means and the second vibration detection means are piezoelectric bodies included in the vibrating body.

4. The driving apparatus for the vibration-type actuator according to claim 1, wherein
the first vibration detection means and the second vibration detection means are electronic parts for measuring mechanical arm currents flowing due to applying the alternating-current signals to the vibrating body.

5. The driving apparatus for the vibration-type actuator according to claim 1, wherein
the arithmetic operation means calculates the vibration vector by finding a sum after multiplying, by a coefficient having been determined in advance, a plurality of sign-affixed vibration amounts, each as the sign-affixed vibration amount, obtained as a result of the sampling at a plurality of timings, each as the timing, by the sampling means.

6. The driving apparatus for the vibration-type actuator according to claim 1, wherein
the arithmetic operation means calculates the vibration vector by averaging a plurality of sign-affixed vibration amounts obtained each as the sign-affixed vibration amount as a result of the sampling at a plurality of timings each as the timing by the sampling means for each cycle of the detection by the first vibration detection means.

7. The driving apparatus for the vibration-type actuator according to claim 1, further comprising:
amplitude detection means for detecting an amplitude of the first output signal; and
speed estimation means for estimating a speed of the moving body on a basis of the amplitude detected by the amplitude detection means and the vibration vector.

8. The driving apparatus for the vibration-type actuator according to claim 2, further comprising:
amplitude detection means for detecting an amplitude of the output signal of the addition means; and
speed estimation means for estimating a speed of the moving body on a basis of the amplitude detected by the amplitude detection means and the vibration vector.

9. The driving apparatus for the vibration-type actuator according to claim 7 or 8, wherein
the speed estimation means estimates the speed of the moving body by multiplying the vibration vector by a gain set according to the amplitude detected by the amplitude detection means.

10. The driving apparatus for the vibration-type actuator according to claim 1, further comprising:
first control means for controlling at least one of a phase difference and amplitudes of the alternating-current signals of the two or more phases generated by the generation means such that the vibration vector follows a first vibration target value.

11. The driving apparatus for the vibration-type actuator according to claim 10, wherein
the first control means determines the first vibration target value such that a position of a member connected directly or indirectly to the moving body follows a predetermined position.

12. The driving apparatus for the vibration-type actuator according to claim 10, wherein
the first control means determines the first vibration target value such that a moving speed of a member connected directly or indirectly to the moving body follows a predetermined speed.

13. The driving apparatus for the vibration-type actuator according to claim 10, wherein
the first control means determines the first vibration target value such that a force received by a member connected directly or indirectly to the moving body follows a predetermined force.

14. The driving apparatus for the vibration-type actuator according to claim 1, further comprising:
amplitude detection means for detecting an amplitude of the first output signal; and
second control means for controlling frequencies of the alternating-current signals of the two or more phases generated by the generation means such that the amplitude detected by the amplitude detection means follows a second vibration target value.

15. The driving apparatus for the vibration-type actuator according to claim 2, further comprising:
amplitude detection means for detecting an amplitude of the output signal of the addition means; and
second control means for controlling frequencies of the alternating-current signals of the two or more phases generated by the generation means such that the amplitude detected by the amplitude detection means follows a second vibration target value.

16. The driving apparatus for the vibration-type actuator according to claim 1, further comprising:
amplification means for amplifying the alternating-current signals of the two or more phases to output drive voltages of two or more phases to be applied to the vibrating body.

17. A driving method for a vibration-type actuator including a vibrating body and a moving body that is in press contact with the vibrating body, the driving method comprising:
a generation step of generating alternating-current signals of two or more phases to be applied to the vibrating body;
a detection step of, by using first vibration detection means and second vibration detection means, detecting vibrations of the vibrating body independently of each other;
a setting step of setting a timing of the detection by the second vibration detection means on a basis of a first output signal that is an output signal of the first vibration detection means;
a sampling step of acquiring a sign-affixed vibration amount by sampling either a second output signal that is an output signal of the second vibration detection means or an output signal obtained through subtraction of the first output signal and the second output signal at the timing set in the setting step; and
an arithmetic operation step of calculating a vibration vector in a direction of movement of the moving body on a basis of the sign-affixed vibration amount.

18. The driving method for the vibration-type actuator according to claim 17, further comprising:
an amplification step of amplifying the alternating-current signals of the two or more phases to output drive voltages of two or more phases to be applied to the vibrating body.

19. A vibration-type actuator, comprising:
a vibrating body;
a moving body that is in press contact with the vibrating body; and
the driving apparatus according to claim 1.

20. An apparatus, comprising:
the vibration-type actuator according to claim 19; and
a member configured to be moved by the vibration-type actuator.
